# EUROPEAN PATENT APPLICATION

(11) **EP 4 645 109 A1**
(43) Date of publication of application: **05.11.2025**
(21) Application number: 24306424.3
(22) Date of filing: 30.08.2024
(51) Int. Cl.: G06F 16/27, H04L 67/1095, H04L 12/46, H04L 41/40, H04L 41/0806, H04L 41/042, H04L 41/044, H04L 41/0895

(54) **METHOD AND SYSTEM FOR MANAGING A COMPUTING INFRASTRUCTURE**

(30) Priority: 30.04.2024 EP 24305690
(71) Applicant: OVH, 59100 Roubaix (FR)
(72) Inventor: BEDOUET, Olivier Jacques Henri, 26120 Malissard (FR)
(74) Representative: BCF Global

(57) **Abstract**

A method (400) for managing configurations of a computing infrastructure involves accessing instructions that provision Network Operations Gateways with network devices and a synchronization module to reconcile their configurations. The synchronization module uses tags associated with objects in the network and sets of rules to detect and create Virtual Service Networks, replicating endpoints between gateways through data synchronization.

## Description

### Introduction

The present technology relates to the technical field of on-premise computing infrastructure and network management. Particularly, it pertains to a solution for managing and automating the configuration of such infrastructure.

### Background

Data center networks have grown increasingly complex, with large network fabrics requiring sophisticated management to ensure optimal performance and security. Traditional approaches employ a single instance of a Network Operations Gateway, also called NOG, for managing these intricate structures. However, relying on a sole NOG presents several challenges. The availability of the network can be compromised if the NOG fails or experiences downtime. In turn, this may result in extended periods of network unavailability, leading to significant business disruption and potential financial losses. Secondly, resiliency is also affected as a single point of failure increases the risk of cascading failures throughout the network fabric. Lastly, security concerns arise when relying on a single NOG instance, as it becomes an attractive target for cyber-attacks.

It is, therefore, an objective of the present technology to overcome at least partially these limitations.

### Summary

The present technology has been designed to overcome at least some drawbacks present in prior art solutions.

According to an embodiment, the present technology refers to a computer-implemented method for managing configurations of at least one computing infrastructure, preferably the computing infrastructure being on-premise. The method comprises accessing instructions from a computer-readable medium that, upon execution by a processor, causes the provisioning and synchronization of multiple network operations gateway modules and the creation of virtual service networks.

The method includes the use of a first and a second network operations gateway modules, each provisioned with at least one network device. A synchronization module is configured to reconcile configurations between these modules. The synchronization module maintains a list of tags associated with objects in the network, such as nodes or services, and sets of rules for each tag.

During a creation phase, the first network operations gateway module creates at least one instance of a virtual service network, which is managed by that network operations gateway module and includes specific data. The synchronization module detects this instance based on its associated tag and verifies if the second network operations gateway module has an instance with the same tag. If not, the synchronization module sends a request to the second network operations gateway module to create a new instance with the same tag and data.

The second network operations gateway module then creates a new instance of the virtual service network and duplicates the first endpoint's data to the newly created endpoint. The synchronization module synchronizes the data between the endpoints, ensuring configuration consistency between the two network operations gateways.

According to an embodiment, the present technology relates to a computer-implemented method for managing configurations of at least one computing infrastructure, preferably the computing infrastructure being on-premise, the method comprising:
- accessing a computer-readable medium comprising instructions which, upon being operated by a processor, causes the execution of software components comprising:
   ∘ A first Network Operations Gateway module NOG1 being provisioned with a first network device;
   ∘ A second Network Operations Gateway module NOG2 being provisioned with a second network device;
   ∘ A synchronization module (GFS), the synchronization module being configured to reconcile configurations between the first Network Operations Gateway module NOG1 and the second Network Operations Gateway module NOG2;
      The synchronization module comprising:
      ∘ A predetermined list of tags, each tag of the predetermined list of tags being associated with at least one predetermined object in at least one network, the object being a node or a service;
      ∘ A plurality of sets of rules, each set of rules being associated with at least one tag of the predetermined list of tags;
- A creation phase, the creation phase comprising:
   ∘ Creating at least one instance of at least one first Virtual Service Network (evpn) by the first Network Operations Gateway NOG1, the first Virtual Service Network (evpn) being managed by the first Network Operations Gateway module NOG1, the first Virtual Service Network comprising at least one specific tag and at least one specific network identifier, the first Virtual Service Network comprising at least one first endpoint (EDGE), the first endpoint comprising data;
   ∘ Detecting, by the synchronization module, the instance of the first Virtual Service Network by detecting the specific tag; Verifying, by the synchronization module, if the second Network Operations Gateway module NOG2 comprises at least one instance of at least a second Virtual Service Network (evpn) comprising the specific tag:
      ▪ If the second Network Operations Gateway module NOG2 does not comprise at least one instance of at least one second Virtual Service Network (evpn) comprising the specific tag:
         - Sending, by the synchronisation module, at least one request to the second Network Operations Gateway module NOG2 to create at least one instance of at least one second Virtual Service Network (evpn) comprising the specific tag and at least one second endpoint (rEDGE);
         - Creating, by the second Network Operations Gateway module NOG2, at least one instance of at least one second Virtual Service Network (evpn) comprising the specific tag and at least one second endpoint (rEDGE);
      ∘ Duplicating the first endpoint from the first Network Operations Gateway module NOG1 to the second Network Operations Gateway module NOG2 by synchronizing, by the synchronization module, the data of the first endpoint with the data of the second endpoint.

According to some embodiments, the first and second network devices are a same network device. In some other embodiments, the first and second network devices are distinct network devices.

According to an embodiment, the present technology relates to a computer-implemented method for managing configurations of on-premise computing infrastructure. The method comprises software components that include a first and second Network Operations Gateway module (NOG1 and NOG2), each provisioned with at least one network device. A synchronization module (GFS) is also included, which is configured to reconcile the configurations between NOG1 and NOG2.

According to an embodiment, the synchronization module includes a predetermined list of tags, each tag being associated with at least one object in a network, such as a node or a service. Additionally, there are a plurality of sets of rules, each set being associated with at least one tag. This tag-based approach allows for efficient and accurate configuration management across multiple networks and devices.

According to an embodiment, during the creation phase, NOG1 creates at least one instance of a first Virtual Service Network, which is managed by NOG1 and includes at least one specific tag and network identifier. The synchronization module then detects this instance using the specific tag and verifies if NOG2 has an instance of a second Virtual Service Network with the same tag. If not, the synchronization module sends a request to NOG2 to create a new instance with the same tag, then data from the first endpoint is duplicated. This process ensures that configurations are consistent between the two network operations gateway modules and reduces the need for manual configuration.

This method offers several technical advantages. Firstly, it provides an efficient and accurate way to manage configurations across multiple on-premise computing infrastructures by utilizing a tag-based approach. Secondly, it allows for automatic synchronization of configurations between NOG1 and NOG2, reducing the need for manual intervention and minimizing errors. Lastly, it ensures that configurations are consistent between the two network operations gateway modules, improving network reliability and performance.

According to another aspect, the present technology relates to a computer-readable storage medium storing instructions that enable a processing system to execute specific functions upon being read and executed. In more detail, this embodiment involves a non-transitory memory device, such as a hard disk, solid-state drive, or compact disc, comprising program instructions. Upon execution by a processing system, these instructions cause a processing system to carry out the steps defined by the present technology. By providing a computer-readable storage medium with the necessary instructions, the present technology enables the implementation and execution of these methods on different processing systems.

According to another aspect, the present technology relates to a computer-readable storage medium storing instructions that, upon being executed by a processing system, cause the processing system to perform the steps of the present technology.

According to an embodiment, the present technology relates to a processing system configured to manage configurations of at least one on-premise computing infrastructure. The processing system comprises a processor and a computer-readable medium containing instructions that, when executed, activate software components. These software components conprise two Network Operations Gateway modules (NOG1 and NOG2), each provisioned with at least one network device. A synchronization module (GFS) is also present, configured to reconcile configurations between the first and second Network Operations Gateway modules. The synchronization module features a predefined list of tags, each tag linked to specific objects in at least one network (nodes or services). Additionally, there are multiple sets of rules, each set connected to a particular tag.

According to an embodiment, the present technology relates to a processing system for managing configurations of at least one computing infrastructure, the computing infrastructure being on-premise, the processing system comprising:
- A processor;
- a computer-readable medium comprising instructions which, upon being operated by the processor, causes the execution of software components comprising:
   ∘ A first Network Operations Gateway module NOG1 being provisioned with at least one network device;
   ∘ A second Network Operations Gateway module NOG2 being provisioned with at least one network device;
   ∘ A synchronization module (GFS), the synchronization module being configured to reconcile configurations between the first Network Operations Gateway module NOG1 and the second Network Operations Gateway module NOG2; The synchronization module comprising:
      ▪ A predetermined list of tags, each tag of the predetermined list of tags being associated with at least one predetermined object in at least one network, the object being a node or a service;
      ▪ A plurality of sets of rules, each set of rules being associated with at least one tag of the predetermined list of tags.

According to an embodiment, the processing system comprises a processor and computer-readable instructions that, when executed, cause software components to run. One of these software components is a first Network Operations Gateway module (NOG1), which is provisioned with at least one network device. Another software component is a second Network Operations Gateway module (NOG2), also provisioned with at least one network device. These modules are configured to be synchronized with each other through a synchronization module, which reconciles any configuration differences between them. According to an embodiment, the synchronization module includes a predetermined list of tags, each tag being linked to at least one object in a network. Objects can be nodes or services. By utilizing tags, the system is able to efficiently identify and manage specific configurations related to these objects. Additionally, the synchronization module incorporates a plurality of sets of rules, with each set being connected to at least one tag. These rules enable automated configuration management based on predefined conditions, enhancing overall network operations efficiency and reducing potential errors.

The use of multiple Network Operations Gateway modules and a dedicated synchronization module allows for improved configuration management in large, complex networks. By automatically reconciling differences between the modules and applying rules based on tags, the processing system ensures consistent configurations across the infrastructure while minimizing manual intervention. This leads to increased network reliability, reduced downtime, and improved overall performance.

The predetermined list of tags associated with objects in the network simplifies configuration management by providing a clear and organized way to identify and manage specific configurations related to these objects. Additionally, the ability to associate multiple sets of rules with each tag enables fine-grained control over configuration changes based on various conditions, ensuring that desired configurations are consistently applied throughout the infrastructure.

According to another aspect, the present technology relates to a multi-controllers system for managing and automating the deployment and configuration of computing infrastructure, the multi-controllers system comprising:
- multiple controllers, each responsible for managing a subset of the infrastructure, and
- a communication module enabling seamless communication between the controllers. This design enhances scalability, improves fault tolerance, and ensures efficient resource utilization by allowing for parallel processing and load balancing among the controllers.
In summary, the present technology offers an efficient and reliable processing system for managing configurations in on-premise computing infrastructures. By utilizing multiple Network Operations Gateway modules, a dedicated synchronization module, predefined tags, and sets of rules, the system is able to automate configuration management, ensure consistent configurations across the infrastructure, and minimize manual intervention, ultimately leading to improved network performance and reliability.

Before providing below a detailed review of embodiments of the technology, some optional characteristics that may be used in association or alternatively will be listed hereinafter:

According to an example, the first Network Operations Gateway module NOG1 is a central Network Operations Gateway module cNOG and the second Network Operations Gateway module NOG2 is a local Network Operations Gateway module lNOG.

According to an example, the first Network Operations Gateway module NOG1 is a local Network Operations Gateway module lNOG and the second Network Operations Gateway module NOG2 is a central Network Operations Gateway module cNOG.

According to an example, the central Network Operations Gateway module cNOG is a single point of control and management for the network of the computing infrastructure and is configured to manage and configure network devices across the computing infrastructure; and the local Network Operations Gateway module lNOG is configured to manage and configure network devices within a predetermined local environment of the computing infrastructure.

According to an example, the local Network Operations Gateway module INOG is configured to manage and configure network devices within a predetermined local environment of the computing infrastructure.

By having a central Network Operations Gateway module (cNOG) and a local Network Operations Gateway module (lNOG), network management can be effectively decentralized yet still maintain a high level of control. cNOG can handle global network policies, while INOG manages the specific network operations at the local level. This leads to improved network efficiency, reduced latency, and enhanced security as issues are addressed promptly and accurately.

The use of a centralized and local Network Operations Gateway architecture allows for greater scalability and flexibility in managing complex networks. cNOG can be designed to handle larger workloads and manage multiple network segments, while INOGs can be added or removed as needed to accommodate changes in the network infrastructure. This adaptability ensures that the network can grow and evolve with the business requirements.

With cNOG managing global policies and INOG handling local operations, there is a significant reduction in network congestion caused by excessive data exchange between different modules. By minimizing the amount of data that needs to be transmitted across the network, the overall network performance is improved, leading to faster response times and increased user satisfaction.

The centralized and local architecture provides an additional layer of security for the network. cNOG can implement global security policies and monitor network traffic for potential threats, while INOGs can focus on securing their respective local networks. This separation of duties ensures that any potential security breaches are identified and addressed quickly and effectively, reducing the risk of unauthorized access or data loss.

In the event of a network failure or outage, having a centralized and local Network Operations Gateway architecture can help ensure network resilience. cNOG can continue to manage global policies and provide overall network oversight, while INOGs can maintain their respective local operations. This redundancy ensures that the network remains functional during disruptions, minimizing downtime and maintaining business continuity.

Another technical advantage lies in the centralization of network management through the use of a single point control and management module, the central Network Operations Gateway (cNOG). This design allows for efficient and effective management of the entire computing infrastructure's network devices from a single location. The cNOG acts as a hub, enabling administrators to monitor, configure, and troubleshoot network devices across the infrastructure in real-time. Centralized management reduces complexity, minimizes errors, and improves overall network performance and security.

Another technical advantage is the implementation of local Network Operations Gateways (INOGs) for managing and configuring network devices within predefined local environments of the computing infrastructure. This approach allows for decentralized management, enabling administrators to handle specific network issues within their respective local areas without requiring intervention from the central cNOG. Localized management reduces latency, improves response times, and enhances overall network resilience by allowing for more autonomous problem-solving and decision-making at the local level.

According to an example, the first Network Operations Gateway module NOG1 is a local Network Operations Gateway module lNOG1 and wherein the second Network Operations Gateway module NOG2 is a local Network Operations Gateway module lNOG2.

By configuring a local Network Operations Gateway (INOG) module to manage and configure network devices within a predetermined local environment, network administrators can effectively centralize control over their infrastructure. This results in improved network security as all changes are made through a single point of management, reducing the risk of unauthorized access or misconfiguration.

With the INOG module managing network devices within its local environment, there can be no need for individual device configuration, which saves time and resources. Additionally, the ability to make changes to multiple devices simultaneously further increases efficiency and reduces the potential for errors.

The INOG module's management of network devices within a local environment enables administrators to quickly identify and resolve issues. By having a comprehensive view of all connected devices, they can easily diagnose and address any problems that may arise, minimizing downtime and maintaining optimal network performance.

As the size and complexity of computing infrastructures grow, managing network devices becomes increasingly challenging. The use of an lNOG module to manage and configure devices within a predetermined local environment allows for easier scaling as new devices can be added to the managed environment without requiring extensive reconfiguration or additional resources.

According to an example, the first Virtual Service Network comprises at least one first node.

According to an example, the step of creating at least one instance of at least one second Virtual Service Network (evpn) comprises the creation of a remote node by the second Network Operations Gateway module NOG2.

According to an example, the synchronization module is configured to scan at least one network of the computing infrastructure every X seconds, X being a predetermined number. In some embodiments, X varies from 30 seconds to 90 seconds. In some embodiments, X is equal to about 30 seconds.

By configuring the synchronization module to scan at least one network every X seconds, outdated or inconsistent data can be identified and synchronized in a timely manner. This ensures that all nodes within the computing infrastructure maintain consistent data, leading to improved system performance and reliability.

The predetermined number X allows for adjusting the synchronization interval to suit specific network requirements. For instance, networks with high data traffic may benefit from more frequent synchronizations, while stable networks can have longer intervals between scans. This flexibility enhances system efficiency and reduces unnecessary resource usage.

The ability to scan at least one network every X seconds enables the method to be easily extended to support larger computing infrastructures with multiple interconnected networks. By configuring the synchronization module to scan each network individually, data inconsistencies can be identified and resolved across the entire infrastructure, ensuring optimal system functionality.

Regular network scans by the synchronization module help detect unauthorized access or intrusion attempts in a timely manner. By identifying and addressing these security threats promptly, the method significantly reduces the risk of data breaches and ensures the confidentiality, integrity, and availability of sensitive information within the computing infrastructure.

The scheduled network scans enable proactive system maintenance by allowing administrators to identify and address potential issues before they escalate into major problems. This approach minimizes downtime and reduces the need for reactive troubleshooting, ultimately improving overall system stability and availability.

According to an example, the present technology comprises, after the creation phase, a deletion phase, the deletion phase comprising erasing the instance of the second Virtual Service Network comprising the specific tag and at least the second endpoint (rEDGE).

This deletion phase enables selective erasure of specific instances of Virtual Service Networks along with their associated endpoints. This feature allows for efficient management of network resources by eliminating unnecessary traffic and reducing the overall load on the network.

By removing instances of Virtual Service Networks and their corresponding endpoints, the deletion phase enhances network security. Unwanted or unauthorized Virtual Service Network can be eliminated, preventing potential security threats and ensuring that only authorized traffic is allowed to pass through the network.

The ability to delete specific instances of Virtual Service Networks and their associated endpoints provides greater flexibility in managing complex networks. This feature enables network administrators to quickly respond to changing requirements or conditions by selectively removing unnecessary components, improving overall network performance and responsiveness.

The deletion phase simplifies the management of large and complex networks by allowing for the elimination of redundant or obsolete Virtual Service Network instances and their associated endpoints. This reduces the overall complexity of the network, making it easier to maintain and troubleshoot.

The deletion phase enables network administrators to efficiently manage the scale of their networks by selectively removing unnecessary components. This feature allows for more effective resource utilization and improved overall network performance as the network grows in size and complexity.

According to an example, the second endpoint is a remote endpoint.

According to an example, the second Virtual Service Network (evpn) is a remote Virtual Service Network.

According to an example, the present technology comprises, before the synchronization step, a step of verification of at least one set of rules associated with the specific tag.

According to an example, the present technology comprises, before and/or after the creation phase, an automated deployment phase of at least one computing infrastructure, the computing infrastructure comprising at least one un-provisioned server and at least one switch,

the automated deployment phase comprising:
- accessing the computer-readable medium comprising instructions which, upon being operated by a processor, causes the execution of software components comprising:
   ∘ A Configuration Management DataBase (CMDB) module configured to manage and store inventory data relating to the at least one un-provisioned server and to the at least one switch;
   ∘ a deployment module configured to deploy the computing infrastructure;
   ∘ a communication module configured to:
      ▪ allow communication between the CMDB module and the deployment module; and
      ▪ manage at least one Dynamic Host Configuration Protocol (DHCP) interface module;
   ∘ an configuration module configured to initialise the CMDB module with information relating to the at least one switch and its configuration;
   ∘ a Network Operations Gateway (NOG) module configured to pilot the at least one switch by receiving configurations data from the CMDB module and by applying the received configurations to the at least one switch;
   ∘ a Domain Name System (DNS) module configured to manage the Domain Name System services in the computing infrastructure;
- calculating data for initialising the CMDB module, the calculated data comprising at least one Internet Protocol (IP) address of the at least one switch
- initialising, by the configuration module at least a part of the software components, by:
   ∘ initialising the CMDB module using the calculated data;
   ∘ configuring the DNS module with configurations from the CMDB module;
- determining, using the CMDB module, configurations for:
   ∘ the communication module on at least one Intelligent Platform Management Interface (IPMI) and on at least one management network; and
   ∘ the at least one switch being configured to allow its provisioning based on the calculated data from the CMDB module;
- provisioning at least one network stack with provisioning data from the CMDB module, the provisioning data comprising data relating to network devices, interfaces, networks and the configurations determined by the CMDB module , the provisioning comprising:
   ∘ provisioning the DNS module;
   ∘ provisioning the NOG module;
- declaring at least one network in the deployment module;
- synchronising the deployment module with the CMDB module to start a server discovery process by the deployment module using the communication module; and
- booting the at least one un-provisioned server to be discovered by the deployment module.

According to an embodiment, the CMDB module is responsible for managing and storing inventory data related to the un-provisioned server and switch. It plays a role in the automated deployment process by providing information required for configuring and provisioning the infrastructure. One of the technology's technical advantage lies in its minimal footprint since it centralises the management of configuration data, reducing the need for manual intervention and potential errors.

According to an embodiment, the deployment module is responsible for deploying the computing infrastructure. It interacts with the CMDB module to obtain necessary information and provisions the network stack, including the DNS module, NOG module, and other components. The technical advantage of this feature lies in its ability to automate the deployment process, reducing the time and effort required for manual configuration and provisioning.

According to an embodiment, the communication module is responsible for managing communication between various software components and allows the CMDB module to communicate with the deployment module. It also manages at least one DHCP interface module. The technical advantage of this feature lies in its ability to facilitate seamless communication between different software components, ensuring proper coordination during the infrastructure deployment process.

According to an embodiment, the configuration module is responsible for initialising the CMDB module with information relating to the switch and its configuration. It calculates data required for initialising the CMDB module and other software components. The technical advantage of this feature lies in its ability to automate the initialisation process, reducing the need for manual intervention and potential errors.

According to an embodiment, the Network Operations Gateway (NOG) module is responsible for piloting the switch by receiving configuration data from the CMDB module and applying the received configurations to the switch. It manages DNS services within the computing infrastructure. The technical advantage of this feature lies in its ability to automate the configuration process for switches, ensuring consistent and accurate configurations across the network.

According to an embodiment, the Domain Name System module is responsible for managing the DNS services within the computing infrastructure. It is provisioned during the deployment process using data from the CMDB module. The technical advantage of this feature lies in its ability to automate the configuration and management of DNS services, ensuring proper name resolution and network functionality.

According to an example, the present technology further comprises a processing sub-system for automated deployment of at least one computing infrastructure, the sub-system comprising at least:
- one un-provisioned server, and
- at least one switch;
- the processor;

and wherein, the software components further comprise:
∘ A Configuration Management DataBase (CMDB) module configured to manage and store inventory data relating to the at least one un-provisioned server and to the at least one switch;
∘ a deployment module configured to deploy the computing infrastructure;
∘ a communication module configured to:
   ▪ allow communication between the CMDB module and the deployment module; and
   ▪ manage at least one Dynamic Host Configuration Protocol (DHCP) interface module;
∘ a configuration module configured to initialise the CMDB module with information relating to the at least one switch and its configuration;
∘ a Network Operations Gateway (NOG) module configured to pilot the at least one switch by receiving configurations data from the CMDB module and by applying the received configurations to the at least one switch;
∘ a Domain Name System module configured to manage the Domain Name System (DNS) services in the computing infrastructure.

According to an embodiment, the Configuration Management DataBase (CMDB) module is configured to manage and store inventory data for the un-provisioned server and switch. This functionality offers several technical advantages. Firstly, it enables efficient tracking and organisation of hardware resources within the computing infrastructure. Secondly, it ensures consistency in configuration data across the infrastructure by providing a centralised repository. Lastly, it simplifies the process of managing and updating configurations as changes can be made in one place and propagated throughout the infrastructure.

According to an embodiment, the deployment module is configured to automate the deployment of the computing infrastructure. This feature offers significant benefits including reduced time and effort required for manual deployment, increased consistency in deployments, and improved scalability as new resources can be easily added to the infrastructure.

According to an embodiment, the communication module is configured to manage communication between the CMDB module and the deployment module while also managing at least one DHCP interface module. This functionality ensures seamless communication between different components of the system, enabling efficient data exchange and coordinated execution of tasks.

According to an embodiment, the configuration module is configured to initialise the CMDB module with information relating to the switch and its configuration. This feature simplifies the process of onboarding new switches into the computing infrastructure by automating the configuration process and reducing the need for manual intervention.

According to an embodiment, the Network Operations Gateway (NOG) module is configured to pilot the at least one switch by receiving configuration data from the CMDB module and applying the received configurations to the switch. This functionality offers several technical advantages including centralised management of switch configurations, improved network security through consistent configurations, and simplified troubleshooting as all configuration data is stored in a single location.

According to an embodiment, the deployment module is configured to: Detect at least one new server using the communication module; Send the port number and the switch number of the new server to the Configuration Management DataBase module using the communication module; Remove the discovery mode of the new server using the communication module.

The first technical advantage lies in the automatic detection of new servers through the deployment module, which is configured to utilise the communication module for this purpose. This feature enables real-time monitoring and swift response to infrastructure changes, ensuring efficient resource allocation and minimising potential network vulnerabilities arising from unidentified devices. The second technical advantage comes into play when the detected new server's information is transmitted to the Configuration Management DataBase module. This step allows for seamless integration of the new server into the existing infrastructure, ensuring consistent configuration and management across the entire system. Additionally, it enables automated provisioning and deployment processes, reducing manual intervention and potential human error.

According to an embodiment, the at least one switch includes switches from distinct manufactures.

The use of switches from distinct manufacturers in the present technology offers several technical advantages. Firstly, it enhances interoperability between different network components. Switches from various vendors may employ diverse protocols or proprietary features that can affect communication and data exchange within a network. By incorporating switches from multiple manufacturers, the system ensures compatibility and seamless integration of these disparate elements.

According to an embodiment, the deployment module comprises a network virtualisation and orchestration component configured to allow creation and management of virtual networks, subnets, routers, firewalls, load balancers, and other related networking components within the deployment module.

According to an embodiment, the server discovery process comprises the following steps:
- Initialization:
   ∘ the server is powered off;
   ∘ the server is unknown from the deployment module and from the CMDB module;
   ∘ network interfaces are configured in a discovery virtual local area network mode (Vlan) by the network virtualisation and orchestration component;
- Discovery:
   ∘ the server is powered on;
   ∘ the server boots through the network;
   ∘ the server loads at least one agent configured to analyse it and the at least one switch, and to generate a report comprising results of the analysis, and to send the report to the deployment module;
   ∘ synchronisation between the deployment module and the CMDB module using the communication device;
- End of discovery:
   ∘ the server is powered off;
   ∘ the network interfaces are unconfigured from the discovery virtual local area network mode (Vlan) using the network virtualisation and orchestration component and put in an isolation mode.

The integration of a network virtualisation and orchestration component within the deployment module enables dynamic creation and management of networking components, providing flexibility in designing and configuring virtual networks. This capability allows for efficient network resource utilisation and facilitates seamless communication between servers and other network elements. The server discovery process using a VLAN mode during network interface configuration ensures secure isolation of the discovery process from the production network. By putting the server interfaces in an isolated VLAN, potential security risks are minimised as unauthorised access to the production network is prevented. Additionally, this approach enables efficient use of network resources by dedicating a separate VLAN for server discovery. The utilisation of agents on servers during the discovery process offers several advantages. Agents can analyse both the server and switch hardware, providing comprehensive information about their capabilities and configurations. This data can be used for provisioning and integration into the infrastructure. Furthermore, agents enable automated reporting, reducing manual intervention and potential errors in the discovery process.

According to an embodiment, the deletion of a server from the deployment module results in the deletion of the corresponding entry in the CMDB module and setting back the discovery process.

Upon deletion of a server from the former, the corresponding entry is automatically deleted from the latter. This eliminates the need for manual updates, reducing potential errors and saving time and resources.

According to an embodiment, the present technology comprises a step of ensuring secure boot and disk encryption for the computing infrastructure components.

A secure boot ensures that only authorised software and/or operating systems are loaded during the system startup process, preventing unauthorised or malicious code from being executed. This feature enhances the security of computing infrastructure components by protecting against rootkits and other forms of persistent malware that can bypass traditional antivirus solutions.

According to an embodiment, the present technology comprises a step for managing resources of the infrastructure, the step of managing comprising:
- discovering at least one bare-metal server using a server management module;
- presenting the at least one bare-metal server to the deployment module as a compute resource using a server management module;
- integrating self-encrypting drives SED into the server management module;
- assigning unique encryption keys to each host and/or disk and/or client of the computing infrastructure resources and managing the assigned unique encryption keys by a key management module.

The first technical advantage lies in the automated discovery of bare-metal servers using a server management module. This feature enables efficient and accurate identification of available hardware resources within the computing infrastructure, reducing manual intervention and potential errors. A second technical advantage is the ability to present discovered bare-metal servers to the deployment module as compute resources. By integrating these servers seamlessly into the deployment module environment, users can leverage existing tools and processes for managing and deploying applications at scale. The integration of self-encrypting drives SED into the server management module adds an additional layer of security to the computing infrastructure. By managing SEDs within the server management module, data remains encrypted during storage and transmission, ensuring protection against unauthorised access and potential data breaches.

According to an embodiment, the server management module comprises:
- a control plane component configured to discover and present servers to the deployment module as compute resources, and further configured to integrate encryption;
- a management module, embedded in an operating system, configured to communicate with the control plane to perform encryption and decryption tasks, manage disks, and establish communication with the control plane.

The integration of encryption in the server management module allows for secure communication between different components of the system, ensuring data confidentiality and protecting against unauthorised access. This feature is useful in today's data-driven landscape where security is a top priority.

According to an embodiment, the present technology comprises a step of securely booting operating systems in the computing infrastructure, the step for securely booting operating systems comprising:
- generating unique signatures for operating system images;
- storing the unique signatures in a key management module;
- validating that only signed operating system images are loaded during the booting of the at least one server by a deployment module by executing an integrated mechanism into the server management module.

A technical advantage of this method lies in the generation and storage of unique signatures for operating system images. This feature ensures the authenticity and integrity of each image before it is loaded into the computing infrastructure. By securely storing these signatures in a key management module, access to them is restricted and controlled, reducing the risk of unauthorised modifications or tampering.

According to an embodiment, the integrated mechanism is configured to manage signatures and versioning.

A technical advantage of configuring the integrated mechanism to manage signatures lies in ensuring data integrity and authenticity. By implementing digital signatures, unauthorised modifications to data or instructions can be detected, preventing potential security vulnerabilities and maintaining the accuracy of information.

According to an embodiment, the present technology comprises a step of providing features taken among at least one of: logging, monitoring, auditing, and security.

Logging provides a record of past events, enabling system administrators to diagnose issues and identify trends. By incorporating logging into the method, valuable data can be collected for troubleshooting and performance analysis. Monitoring allows real-time observation of system behaviour and user activity. This feature is essential for maintaining security and ensuring optimal performance. Incorporating monitoring into the method enables proactive intervention in response to anomalous events or conditions. Auditing offers a systematic evaluation of system activity, providing an essential tool for compliance with regulatory requirements and organisational policies. By including auditing as part of the method, users can ensure that their systems are operating within established guidelines and identify any potential areas of non-compliance.

According to an embodiment, the computing infrastructure comprises a private network for server discovery.

By incorporating a private network for server discovery in the computing infrastructure, communication between servers occurs within a secure and controlled environment. This reduces the risk of unauthorised access or interception of data during the discovery process. A private network enables efficient and reliable server discovery as it allows for direct connections between servers without the need for traversing the public internet. This results in faster response times and improved overall system performance. Implementing a private network for server discovery enhances scalability by allowing for easy addition or removal of servers within the network. This flexibility enables businesses to adapt to changing demands and expand their computing infrastructure as needed. The use of a private network for server discovery provides an additional layer of security through access control mechanisms. By limiting communication to authorised users and devices, potential threats from external sources are minimised.

According to an embodiment, the present technology comprises a step of managing Internet Protocol (IP) addresses in the computing infrastructure, the step of managing Internet Protocol (IP) addresses comprising:
- pre-calculating all required IP addresses based on a set of rules, such as templates, subnet mask, number of hosts per subnet, etc.; and
- storing and transmitting the calculated IP addresses to the appropriate components in the network through the communication device.

Pre-calculating IP addresses based on a set of rules allows for efficient, dynamic and accurate address management within the computing infrastructure. By calculating all required IP addresses prior to implementation, potential errors or inconsistencies can be minimised, ensuring a well-organized and streamlined network.

According to an embodiment, the present technology comprises a step of managing a fleet of distributed computing infrastructures, the step comprising at least the following sub-steps:
- deploying and configuring computing components in each computing infrastructure of the distributed computing infrastructures using automated processes;
- pulling configurations across all computing infrastructures of the distributed computing infrastructures;
- monitoring performance and resource utilization; and
- implementing security measures to protect against unauthorized access or data breaches;
- preferably, providing features such as logging, monitoring, auditing, and key management for distributed key management and auditing..

By managing a fleet of distributed computing infrastructures, this method enables efficient utilization of resources and reduces the risk of data loss or downtime due to hardware failure or natural disasters at any single location. The distributed architecture allows for load balancing and automatic failover, ensuring high availability and reliability of data processing and storage. Effective monitoring and control of each computing infrastructure in the fleet are facilitated through this method, allowing for real-time identification and resolution of issues before they escalate into major problems. This proactive approach minimises downtime and enhances overall system performance. The method supports dynamic scaling of resources based on demand, ensuring optimal use of computing power, storage capacity, and network bandwidth. This flexibility enables businesses to adapt quickly to changing requirements and accommodate growth without the need for costly infrastructure upgrades. Security is enhanced through the management of a fleet of distributed computing infrastructures as it allows for the implementation of advanced security measures across multiple locations. Data can be replicated and encrypted, reducing the risk of unauthorised access or data loss. This method enables seamless integration with various cloud services and on-premises infrastructure, providing businesses with the flexibility to choose the best deployment model for their specific needs. It also supports hybrid cloud environments, allowing for the efficient management of both public and private resources. The distributed nature reduces latency and improves response times by bringing data processing closer to the end-users. This results in a better user experience and increased productivity for applications that require real-time data processing.

According to an embodiment, the present technology comprises a step of mutualising at least one switch between a plurality of deployment module.

By mutualising at least one switch between a plurality of deployment modules, resource utilisation is optimised as each module can share the same switch, reducing the need for multiple switches and resulting in cost savings. Mutualising switches also enhances network flexibility as it allows for easier reconfiguration and management of the interconnections between deployment modules. This can be particularly beneficial in dynamic environments where resources are frequently added or removed. The use of mutualised switches improves overall system performance by reducing latency and increasing bandwidth between deployment modules. As data does not need to traverse multiple switches to reach its destination, the network becomes more efficient and responsive. Mutualising switches contributes to improved fault tolerance as a single point of failure in one switch affects only the connected modules, rather than the entire system. This reduces downtime and ensures business continuity for applications running on the deployment modules.

According to an embodiment, the present technology comprises at least one NOG Master and at least a plurality of NOG slaves, the NOG master comprising data about a plurality of switches, each NOG slave comprising data about only one switch of the plurality of switches.

The present processing system enables the isolation of networks by assigning data about multiple switches to a NOG master, while each NOG slave only handles data related to one specific switch. This design reduces the interconnectivity between different parts of the network, thereby minimising potential vulnerabilities and improving overall security.

### Brief description of the drawings

For a better understanding of the present technology, as well as other aspects and further features thereof, reference is made to the following description which is to be used in conjunction with the accompanying drawings, where:
FIG. 1: Figure 1 illustrates a computing infrastructure with servers and switches according to an embodiment of the present technology.
FIG. 2: Figure 2 illustrates the sequential steps of a computer-implemented method for automated deployment of at least one computing infrastructure, according to an embodiment of the present technology.
FIG. 3: Figure 3 illustrates an automated computing infrastructure deployment system, according to an embodiment of the present technology.
FIG. 4a to 4f: Figures 4a to 4f schematically illustrate steps of a computer-implemented method for automated deployment of at least one computing infrastructure, according to an embodiment of the present technology.
FIG. 5a to 5k: Figures 5a to 5k illustrate steps implemented by at least one server management module related to self-encrypting drives, according to an embodiment of the present technology.
FIG. 6: Figure 6 schematically illustrates a workflow switch configuration, according to an embodiment of the present technology.
FIG. 7a and 7b: Figures 7a and 7b schematically illustrate a multi-instances Network Operations Gateway (NOG) module, according to an embodiment of the present technology.
FIG. 8a to 8h: Figures 8a to 8h illustrate the creation phase and the deletion phase according to an embodiment of the present technology.
FIG. 9: Figure 9 illustrates the sequential steps of a computer-implemented method for managing configurations of at least one computing infrastructure, according to an embodiment of the present technology
FIG. 10: Figure 10 illustrates a processing system, according to an embodiment of the present technology.

### Detailed description

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present technology.

In the context of the present technology, a server refers to a computer system or a specialised hardware device that provides services and resources over a network to other computers, devices, or users. Servers are typically equipped with robust processing power, large memory capacity, and extensive storage capabilities to handle intensive computational tasks and manage vast amounts of data. They run dedicated software, such as web servers, database servers, file servers, or application servers, to deliver specific functionalities and services to clients upon request. The client devices access these resources through standard communication protocols like HTTP, FTP, or TCP/IP.

In the context of this technology, a switch is a networking device that forwards and filters data packets between devices connected to it. It uses packet switching to receive, process, and forward data to other devices on the network based on their MAC or IP addresses. Switches are essential components in building and managing computer networks, enabling efficient communication between different devices within a data centre infrastructure.

According to an embodiment, the present technology relates to a method for managing configurations of at least one computing infrastructure, preferably on-premise.The method comprises several steps as outlined in the following description.

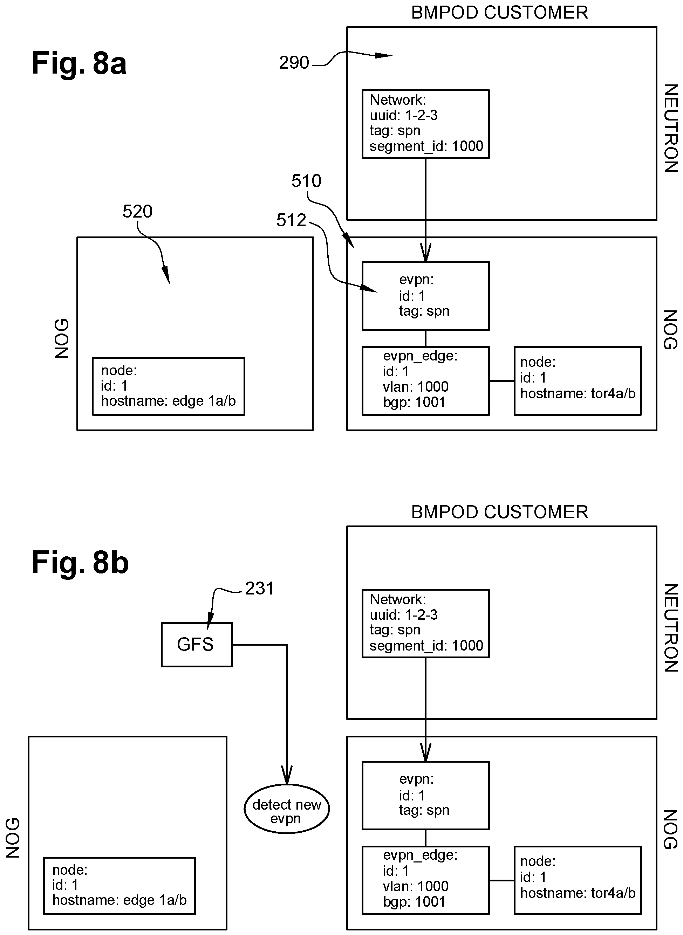

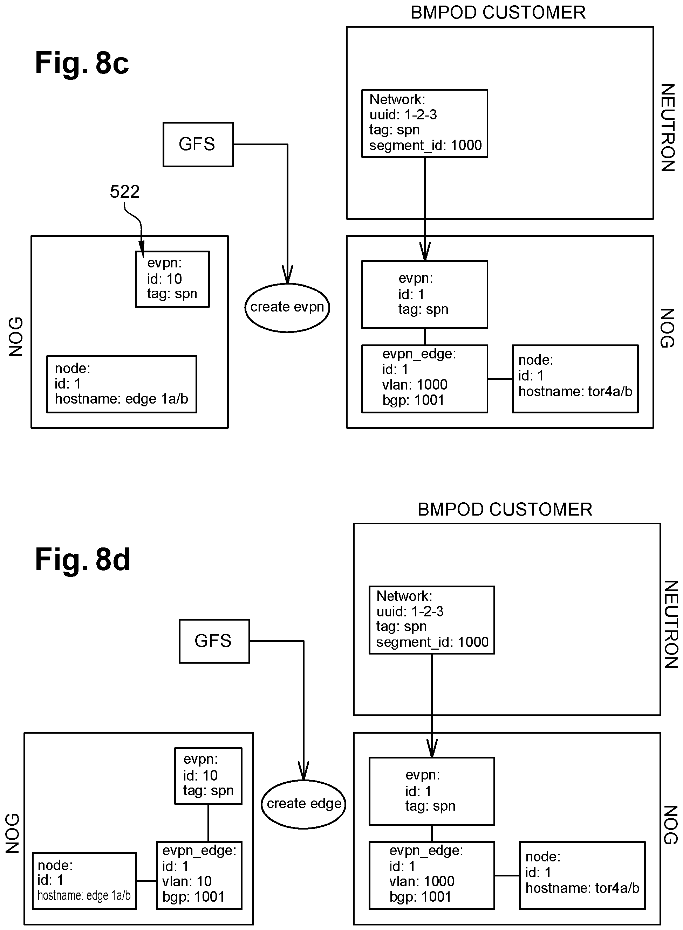

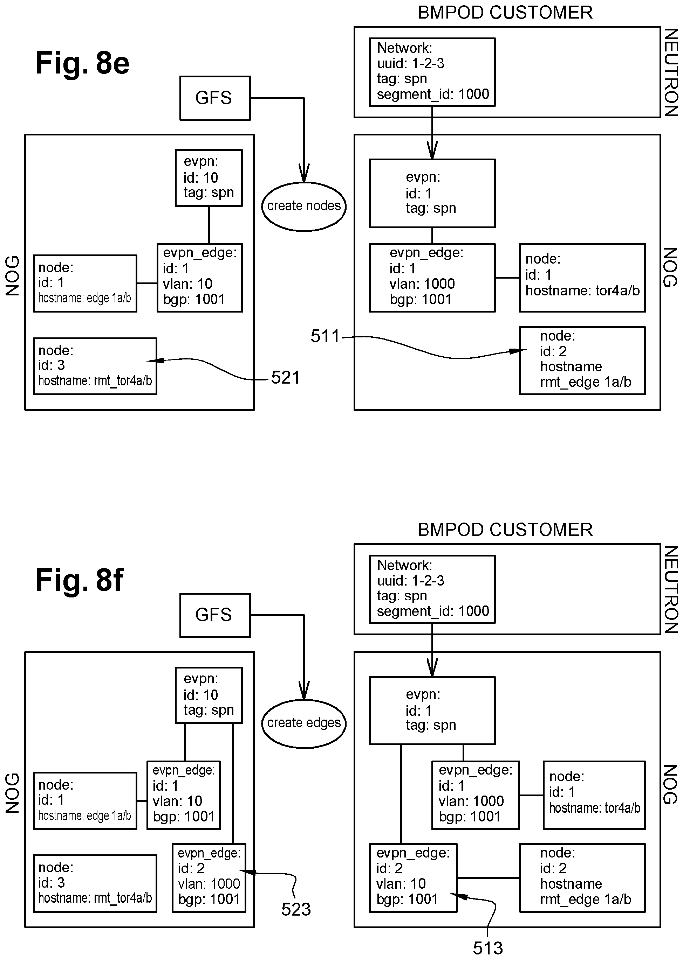

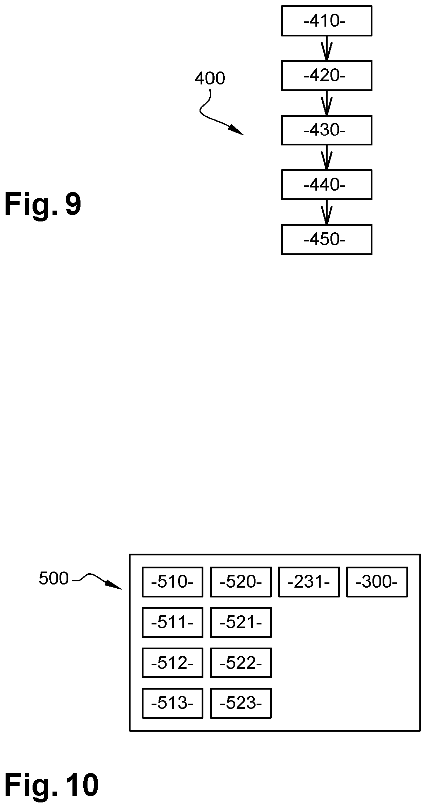

According to an embodiment, and as illustrated by figure 9 and figures 8a to 8f, the present technology relates to a computer-implemented method 400 for managing configurations of at least one computing infrastructure 10, preferably the computing infrastructure 10 being on-premise, the method 400 comprising:
- accessing 410 a computer-readable medium comprising instructions which, upon being operated by a processor 300, causes the execution of software components comprising:
   ∘ A first Network Operations Gateway module NOG1 510 being provisioned with at least one network device;
   ∘ A second Network Operations Gateway module NOG2 520 being provisioned with at least one network device;
   ∘ A synchronization module GFS 231 configured to reconcile configurations between the first Network Operations Gateway module NOG1 510 and the second Network Operations Gateway module NOG2 520;
      The synchronization module 231 comprising:
      ∘ A predetermined list of tags, each tag of the predetermined list of tags being associated with at least one predetermined object in at least one network, the object being a node or a service, for example;
      ∘ A plurality of sets of rules, each set of rules being associated with at least one tag of the predetermined list of tags, preferably each set of rules is configured to provide instructions to the synchronization module 231;
- A creation phase, the creation phase comprising:
   ∘ Creating 420, as illustrated by figure 8a, at least one instance of at least one first Virtual Service Network 512 by the first Network Operations Gateway NOG1 510, the first Virtual Service Network 512 being managed by the first Network Operations Gateway module NOG1 510, the first Virtual Service Network 512 comprising at least one specific tag and at least one specific network identifier, the first Virtual Service Network 512 comprising at least one first endpoint 513, also called EDGE, the first endpoint 513 comprising data;
   ∘ Detecting 430, as illustrated by figure 8b, by the synchronization module 231, the instance of the first Virtual Service Network 512 by detecting the specific tag;
   ∘ Verifying 440, as illustrated by figures 8c, 8d and 8e, by the synchronization module 231, if the second Network Operations Gateway module NOG2 520 comprises at least one instance of at least a second Virtual Service Network 522 comprising the specific tag:
      ▪ If the second Network Operations Gateway module NOG2 520 does not comprise at least one instance of at least one second Virtual Service Network 522 comprising the specific tag:
         - Sending, by the synchronisation module 231, at least one request to the second Network Operations Gateway module NOG2 520 to create at least one instance of at least one second Virtual Service Network 522 comprising the specific tag and at least one second endpoint 523;
         - Creating, by the second Network Operations Gateway module NOG2 520, at least one instance of at least one second Virtual Service Network 522 comprising the specific tag and at least one second endpoint 523;
   ∘ Duplicating, as illustrated by figure 8f, the first endpoint 513 from the first Network Operations Gateway module NOG1 510 to the second Network Operations Gateway module NOG2 520 by synchronizing, by the synchronization module, 231 the data of the first endpoint 513 with the data of the second endpoint 523.

According to an embodiment, and as illustrated by figure 8a, two Network Operations Gateway (NOG) modules 510 and 520 or 252 and 251, referred to as NOG1 and NOG2, are provisioned with at least one network device each. These NOGs can act as local and central instances, respectively, responsible for managing specific parts of the infrastructure, or can act as two local instances. Indeed, as described hereafter, the present technology is configured to allow synchronisation between local NOG and central NOG and between local NOGs as well. In this description, a central NOG can also be called a NOG master 251 , and a local NOG cam also be called a NOG slave 252. According to an embodiment, a NOG master is responsible for managing nodes outside of racks or not managed by a Local NOG instance, while a NOG slave manages devices within a rack and is aware of remote nodes but unable to change their configurations. A central NOG can be aware of Local NOG instances but unable to change their configurations.

According to an embodiment, the synchronization module 231, referred to as GFS and also called a communication module 230 in some embodiments of the present technology, is configured to reconcile configurations between NOG1 510, 252 and NOG2 520, 251. The synchronization module includes a predetermined list of tags, each tag being associated with at least one object in the network, such as a node or a service. Additionally, there are multiple sets of rules, each set being associated with at least one tag. These sets of rules are designed to provide instructions to the synchronization module 231.

According to an embodiment, the creation phase begins by having NOG1 510 create at least one instance of a Virtual Service Network (VSN) 512, also called evpn1, which is managed by NOG1 510 and comprises at least one specific tag, network identifiers, and at least one endpoint EDGE 513. The synchronization module 231 then detects this instance of the VSN 512 based on its specific tag.

According to an embodiment, if NOG2 520 does not have an instance of a Virtual Service Network with the same specific tag, a request is sent from the synchronization module 231 to NOG2 520 to create a new instance of a Virtual Service Network 522 with the specific tag and at least one endpoint rEDGE 523. Once created, the data of the first endpoint EDGE 513 in NOG1 510 is synchronized with the second endpoint rEDGE 523 in NOG2 520.

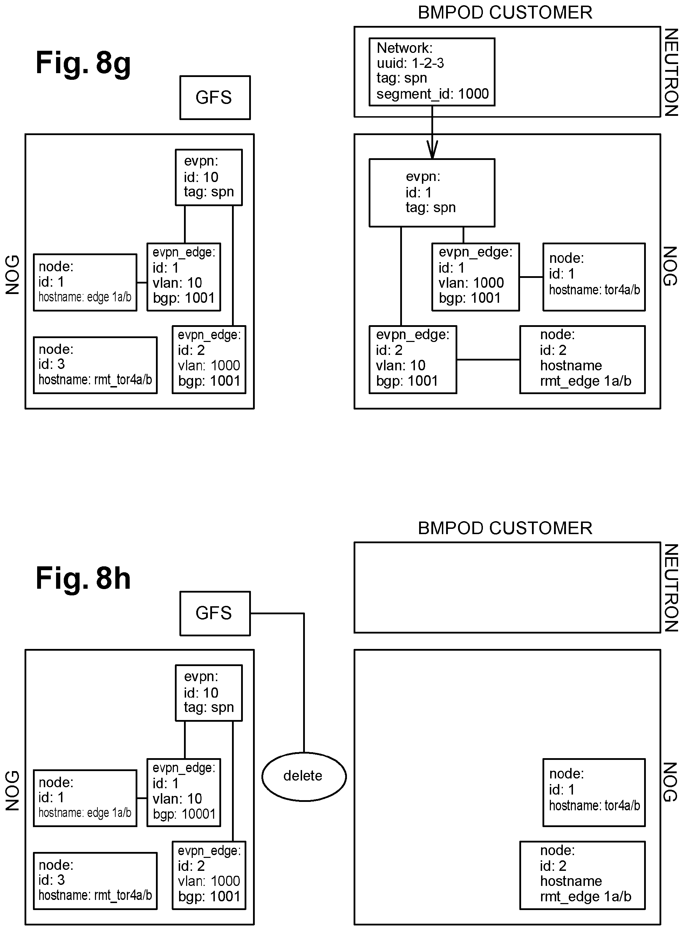

According to an embodiment, in case of a deletion event, as illustrated by figures 8g and 8h, all objects in the NOG1 will be deleted, and the synchronization module needs to clean up remote nodes and associated edges on both NOG1 and NOG2, as described hereafter. This process ensures that configurations remain consistent between NOG1 and NOG2, and therefore between the local and central instances or between the local instances.

According to an embodiment, the method 400 provides a robust solution for managing configurations of on-premise computing infrastructure 10 using multiple Network Operations Gateway modules 510, 520, 251, 252 and a synchronization module 231 to maintain consistency between them. The predetermined list of tags and sets of rules enable efficient management of specific objects within the network while ensuring security and reliability.

According to an embodiment, NOG2 520, 251 can be a central Network Operations Gateway module (cNOG) and NOG1 510, 252 can be a local Network Operations Gateway module (lNOG). The cNOG serves as the primary network operations hub, managing and monitoring network traffic on a larger scale. In contrast, the INOG is responsible for handling network operations at a local level, typically within a smaller network segment.

Advantageously, having a centralized and decentralized approach to network operations allows for improved efficiency and flexibility. For example, the cNOG can handle complex tasks and provide an overall view of the network, while the INOGs can address specific issues in their respective areas without interfering with the broader network operations.

Preferably, the cNOG and INOG modules do not communicate with each other, and the synchronisation module 231 is, therefore, configured to ensure consistent network policies and seamless data synchronisation. This collaboration enables efficient problem-solving and reduces potential redundancies or conflicts within the network infrastructure.

Additionally, the use of multiple INOGs can provide increased fault tolerance and redundancy in the network operations system. For example, an according to an embodiment, if one INOG fails, another can take over its responsibilities without significantly impacting the overall network performance.

According to another embodiment, the NOG1 510 can be a local Network Operations Gateway module (lNOG), and the NOG2 520 can be the central Network Operations Gateway module (cNOG).

According to another embodiment, the NOG1 510 can be a local Network Operations Gateway module (lNOG), and the NOG2 520 can be the local Network Operations Gateway module (INOG).

According to an embodiment, the present application discloses a method 400 for managing and configuring network devices in a computing infrastructure 10. The method 400 can be configured to employ two distinct types of Network Operations Gateway modules: a central Network Operations Gateway module cNOG and a local Network Operations Gateway module lNOG.

According to an embodiment, the cNOG is a single point of control and management for the entire network of the computing infrastructure 10. It is configured to manage and configure network devices distributed across the computing infrastructure 10. Advantageously, having a centralized cNOG simplifies network management by providing a unified interface for managing multiple network devices in various locations within the computing infrastructure 10.

According to an embodiment, the INOG is configured to manage and configure network devices within a predetermined local environment of the computing infrastructure 10. It provides fine-grained control over the network devices in its jurisdiction while maintaining the autonomy of the local network environment.

Preferably, the cNOG and INOG are synchronized with each other to ensure consistent configuration across the computing infrastructure while allowing for customization within individual local environments. This approach strikes a balance between centralized control and local flexibility.

According to an embodiment, each NOG can be aware of the configuration of the other NOGs thanks to the synchronisation module 231 that commands the creation of remote instances within one NOG, the remote instances being duplicate of real instances managed by other NOGs.

The method 400 may further include steps such as receiving data from network devices, processing the received data, and transmitting configuration instructions to the network devices based on the processed data. Preferably, the NOGs utilizes standard communication protocols for exchanging data with the network devices.

Additionally, the method may involve monitoring the status of network devices and generating alerts when certain conditions are met. This enables timely response to potential issues and ensures optimal performance of the network infrastructure.

According to an embodiment, the first Virtual Service Network (VSN) 512 comprises at least one first node 511. The creation of at least one instance of a second Virtual Service Network 522, preferably performed by a Network Operations Gateway module NOG2 520, involves the generation of a remote node 521.

The first VSN 512 is a network that provides virtual services to communication endpoints 513. It consists of at least one node 511, which can be a physical or logical entity responsible for routing and forwarding data packets within the first VSN 512.

In accordance with this embodiment, the NOG2 520 is configured to generate a remote node 521 during the second VSN 522 creation process. A remote node is a node that participates in the VSN but does not belong to its NOG; it is just an instance called remote because it is configured to simply indicate to NOG2 the existence of the first VNS 512, preferably of the endpoint 513, advantageously of the node 511.

According to an embodiment, the synchronization module 313 is configured to scan at least one network of the computing infrastructure every X seconds. Preferably, the predetermined number X is adjustable and can be set based on the specific requirements of the computing infrastructure 10. For instance, if the networks being synchronized contain large amounts of data or are subject to frequent changes, a shorter scan interval may be desirable. Conversely, in situations where network traffic is minimal and data changes infrequently, a longer scan interval may suffice. X can also be dynamic for example.

Preferably, the synchronization module 231 employs efficient algorithms to minimize the impact on network performance during scans. Additionally, it can be designed to prioritize critical data or applications for faster synchronization. Advantageously, this feature ensures that data across the computing infrastructure 10 remains consistent and up-to-date, thereby improving overall system reliability and efficiency. Furthermore, it enables seamless integration of new devices or applications into the existing infrastructure without disrupting ongoing operations.

In some embodiments, the synchronization module 231 may be configured to scan multiple networks concurrently, thus reducing the overall time required for synchronization. This can be particularly beneficial in large-scale computing environments where numerous interconnected networks exist.

Moreover, the method 400 may include error detection and correction mechanisms to ensure data integrity during transmission between networks. These mechanisms can help mitigate potential issues such as packet loss or data corruption that could lead to inconsistencies within the infrastructure.

Advantageously, the synchronization module 231 can be implemented using standard communication protocols and technologies commonly used in computing infrastructure 10, making it easily integrable with existing systems. Additionally, it can be designed to operate in a distributed manner, allowing for improved scalability and fault tolerance.

According to an embodiment, the creation phase can be followed by a deletion phase, as illustrated by figures 8g and 8h. In the creation phase, an instance of a Virtual Service Network (VSN), i.e. an EVPN, is created with certain tags and endpoints. Subsequently, in the deletion phase, the instance of the EVPN having the specific tag and at least one endpoint is erased.

Preferably, in this deletion phase, all the instances of the VSN identified by the specific tag are targeted for deletion.

Advantageously, the present technology allows for efficient management of VSN instances by enabling selective deletion of unwanted or outdated instances. This can lead to improved network performance and reduced resource utilization.

According to an embodiment, the method 400 can comprise a verification step preceding the duplicating step 450. This verification step involves checking at least one set of rules associated with the specific tag. Preferably, the rules are stored in a memory or database and retrieved for verification during the method execution. The rules may include instructions, access control policies, data validation rules, or other business logic. This verification step can be configured to provide instructions to the synchronization module 231 according to the specific tag.

According to an embodiment, and as illustrated by figure 10, the present technology relates to a processing system 500 for managing configurations of at least one on-premise computing infrastructure 10. The processing system 500 comprises a processor 300 and a computer-readable medium storing instructions that, when executed by the processor, causes the software components to function.

The software components can comprise a first Network Operations Gateway module (NOG1) 510, which is provisioned with at least one network device, a second Network Operations Gateway module (NOG2) 520, also provisioned with at least one network device, and a synchronization module (GFS) 231 configured to reconcile configurations between NOG1 510 and NOG2 520.

According to an embodiment, the synchronization module 231 comprises a predetermined list of tags, each tag being associated with at least one object in the network. The objects can be nodes or services. For instance, tag "A" may be associated with node "N1," while tag "B" is linked to service "S1."

Furthermore, each tag can be associated with at least one set of rules. These rules define the actions to be taken when specific tags are detected or modified in the network. For example, if tag "A" is updated, rule set 1 may trigger an alert, while rule set 2 could initiate a backup process, while rule set 3 may generate the creation of a duplicate of an endpoint.

According to an embodiment, the first and second Network Operations Gateway modules (NOG1 510 and NOG2 520) are responsible for managing configurations of their respective network devices. They communicate with the synchronization module (GFS) 231 to ensure configuration consistency between them.

According to an embodiment, the synchronization module (GFS) 231 comprises a predetermined list of tags, which are used as identifiers for various objects in the network.

According to an embodiment, the synchronization module (GFS) 231 also manages a plurality of sets of rules. Each set is linked to at least one tag and defines the actions to be taken when that tag is detected or modified in the network.

According to an embodiment, the synchronization module (GFS) 231 uses these rules and tags to reconcile configurations between NOG1 510 and NOG2 520. When a change occurs in one of the modules, GFS 231 checks the associated tag(s) and applies the appropriate rule set(s). This ensures that both modules 510 and 520 maintain consistent configurations.

According to an embodiment, the processing system 500 offers several advantages over traditional single-instance solutions. By having multiple instances (NOG1 and NOG2), the network infrastructure 10 is isolated, reducing the risk of unintended changes or misconfigurations that could affect the entire data center. Security is enhanced by limiting access to configurations and control of switches to only authorized personnel managing their respective NOGs. Scalability is improved as adding more devices can be easily managed by creating new instances without affecting the existing infrastructure or requiring extensive changes to the management system. Flexibility is also increased, as each instance can be configured independently, allowing for customized solutions tailored to specific use cases within the data center.

According to an embodiment, the present technology comprises also an automated deployment and management phase 100 of infrastructure scalable from a few servers to a data centre of up to 100 racks, for example, without any limitation. The smallest deployment starts with one server for control and one switch. The present technology provides ready-for-provision multi-tenants BareMetal instances, i.e. un-provisioned servers, supporting any operating system with private networking inside each tenant.

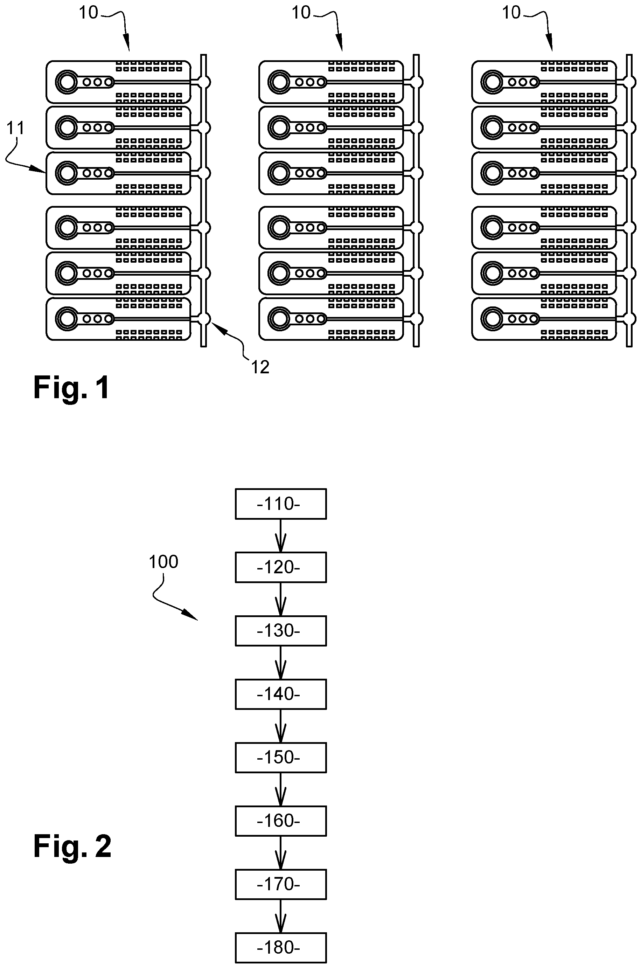

According to an embodiment, and as illustrated by Figures 1 and 2, the present technology comprises an automated deployment phase 100automated deployment phase 100 of at least one computing infrastructure 10, also called a data centre. This computing infrastructure 10 comprises at least one un-provisioned server 11 and at least one switch 12. The automated deployment phase 100 comprises several, preferably interconnected, components configured to work together to deploy and manage the computing infrastructure 10 in an autonomous manner.

As illustrated by Figures 2, 3 and 4a to 4f, according to an embodiment, the computer-implemented automated deployment phase 100 comprises at least the following steps:
- accessing 110 a computer-readable medium, the computer-readable medium comprises preferably instructions which, upon being operated by a processor 300, causes the execution of software components. Advantageously, the software components comprise at least:
   ∘ a Configuration Management DataBase (CMDB) 210, also called Netbox;
   ∘ a deployment module 220, also called OpenStack;
   ∘ a communication module 230, also called Dicious;
   ∘ a configuration module 240, also called Flux;
   ∘ a Network Operations Gateway module 250, also called NOG;
   ∘ a Domain Name System module 260, also called DNS module or DNSMasq;
   ∘ Optionally, a server management module 270, also called Ironic;
   ∘ Optionally, a key management module 280, also called Barbicane;
   ∘ Optionally, a network virtualisation and orchestration module 290, also called Neutron.
- calculating 120 data for initialising the CMDB module 210, the calculated data comprising at least one Internet Protocol (IP) address of the at least one switch 12;
- initialising 130, by the configuration module 240, at least a part of the software components, by:
   ∘ initializing the CMDB module 210 using the calculated data; and
   ∘ configuring the DNS module 260 with configurations from the CMDB module 210;
- determining 140, using the CMDB module 210, configurations for:
   ∘ the communication module 230 on at least one Intelligent Platform Management Interface (IPMI) and on at least one management network; and
   ∘ the switch 12 being configured to allow its provisioning based on the calculated data from the CMDB module 210;
- provisioning 150 at least one network stack, i.e. at least the un-provisioned server 11, with provisioning data from the CMDB module 210, the provisioning data comprising data relating to network devices, interfaces, networks and the configurations determined by the CMDB module 210, the provisioning comprising:
   ∘ provisioning the DNS module 260;
   ∘ provisioning the NOG module 250;
- declaring 160 at least one network in the deployment module 220;
- synchronizing 170 the deployment module 220 with the CMDB module 210 to start a server discovery process by the deployment module 220 using the communication module 230; and
- booting 180 the at least one un-provisioned server 11 to be discovered by the deployment module 220.

According to an embodiment, the CMDB module 210, Netbox for example, is configured to manage and store inventory data relating to the un-provisioned server 11 and switch 12. Netbox 210 is initialized with information about the switches 12 and their configurations using the configuration module 240, Flux for example. This initialisation process involves calculating data for initialising Netbox 210, which comprises at least one IP address of the switch 12.

According to an embodiment, the primary functions of the CMDB module 210 comprise:
- Managing and storing inventory data: the CMDB module 210 maintains comprehensive information about various components of the data centre infrastructure 10, such as servers 11, switches 12, interfaces, VLANs, regions, and configuration templates;
- Pre-generating YAML files: the CMDB module 210 calculates the necessary data to configure network equipment and generates pre-filled YAML files. These YAML files contain the required information to configure the network devices automatically;
- Initializing software components: Upon receiving the pre-filled response file, the CMDB module 210 initialises specific software components like DHCP services on IPMI and management networks, switches, and the Domain Name System (DNS) services;
- Configuration synchronisation: When a change is made to the network configuration in the CMDB module 210, the CMDB module 210 propagates the updated information to all connected controllers through well-defined APIs or communication mechanisms. This ensures that all controllers have up-to-date information about the network infrastructure.

According to an embodiment, the deployment module 220, OpenStack for example, is configured to deploy the computing infrastructure 10. OpenStack 220 communicates with Netbox 210 using the communication module 230, Dicious for example.

According to an embodiment, the primary functions of the deployment module 220 comprise:
- Deployment of computing infrastructure: the deployment module 220 is configured to deploy the computing infrastructure 10, comprising servers 11 and networking components, based on the configuration data provided by other modules like the CMDB module and the configuration module (Flux);
- Virtual network creation: the deployment module 220 comprises at least one component, the network virtualisation and orchestration component 290, configured to create virtual networks necessary for managing server communications and various network interfaces within the computing infrastructure 10;
- DHCP interface management: the deployment module 220 is configured to manage Dynamic Host Configuration Protocol (DHCP) interface modules, like DNS module 260 for example, to assign IP addresses and other relevant configurations to servers during the discovery process.
- Server discovery and enrollment: the deployment module 220 is configured to discover new servers, i.e. un-provisioned servers 11, when they boot up, to enroll them into the processing sub-system 200, and to make them manageable by users.
- Synchronization with Netbox: the deployment module 220 is configured to synchronise its configuration data with the CMDB module 210, to ensure consistency between physical and virtualized network configurations.
- Power management: the deployment module 220 is configured to manage power states of servers to ensure they are ready for deployment or maintenance activities.
- Image deployment: the deployment module 220 is configured to deploy operating system images and other necessary configurations to newly added servers, i.e. un-provisioned servers 11, ensuring consistency and minimizing downtime.
- Provisioning: the deployment module 220 is configured to provision new servers with the appropriate network configurations, allowing them to integrate seamlessly into the existing computing infrastructure 10. This includes configuring virtual interfaces, IP addresses, and routing tables.
- Network reconfiguration: When there is a change in the network configuration in the CMDB module 210, the deployment module 220 automatically reconfigures the virtual networks and other network components as needed to maintain consistency with the physical network.

According to an embodiment, the communication module 230 is configured to manage at least one Dynamic Host Configuration Protocol (DHCP) interface module 260, such as DNSmasq for example. The communication module 230 is configured to allow the communication between Netbox 210 and OpenStack 220, allowing the exchange of necessary configuration data.

According to an embodiment, the configuration module 240 is configured to initialize the CMDB module 210 with information relating to the at least one switch 12 and its configuration.

According to an embodiment, one of the primary functions of the configuration module 240 is to initialise the CMDB module 210 with information relating to the network infrastructure, including switches 12 and their configurations. More specifically, the configuration module 240 can perform the following tasks:
- Initializing the CMDB module 210: The configuration module 240 is configured to initialise the CMDB module 210 by providing it with necessary data such as IP addresses of switches 12, interfaces, VLANs, region names, and configuration templates. This data is calculated based on predefined rules and stored in the configuration module 240.
- Provisioning network devices: The configuration module 240 is configured to provision network devices like switches 12 by pushing their configurations to them after they have been booted up. It does this by utilising rendered configurations obtained from the CMDB module 210 for DHCP services on IPMI and management networks, as well as for switch provisioning.
- Synchronizing with the deployment module 220: The configuration module 240 is configured to synchronise with the deployment module 220 to start the server discovery process. This synchronisation ensures that all network configurations are consistent between the physical infrastructure managed by the CMDB module 210 and the virtual networks managed by the deployment module 220.
- Managing IP addresses: The configuration module 240 is configured to manage IP addresses in the computing infrastructure 10 by pre-calculating all required IP addresses based on a set of rules, such as template, subnet mask and number of hosts per subnet, for example. It then stores and transmits these calculated IP addresses to the appropriate components in the network through the communication device 230.

According to an embodiment, the Network Operations Gateway (NOG) module 250 is configured to pilot the switch 12 by receiving configuration data from the CMDB module 210 and applying the received configurations to the switch 12. This process ensures that the switch 12 is properly configured based on the data stored in the CMDB module 210.

According to an embodiment, the primary functions of the NOG module 250 comprise:
- Receiving configurations from the CMDB module 210: The NOG module 250 is configured to receive configuration data from the CMDB module 210, which comprises information about switches 12, interfaces, VLANs, and other networking components.
- Applying received configurations to network devices: Once the NOG module 250 receives the configurations from the CMDB module 210, it is configured to apply these configurations to the corresponding network devices, ensuring that they are properly configured according to the desired settings.
- Piloting switches: The NOG module 250 is responsible for managing and controlling switches 12 in the computing infrastructure 10. It can pilot switches 12 by receiving configurations from the CMDB module 210 and applying them to the switches 12, allowing for efficient and automated network management.
- Communication with other modules: The NOG module 250 is configured to communicate with other components of the present technology, such as the deployment module 220 and the communication module 230 for example, to ensure seamless integration and coordination between different parts of the computing infrastructure 10.
- Ensuring network security: The NOG module 250 is configured to maintain network security by applying configurations that adhere to security policies and best practices, ensuring that the data centre infrastructure remains protected against potential threats.

According to an embodiment, the Domain Name System (DNS) module 260 is configured to manage the DNS services in the computing infrastructure. The DNS module 260 is provisioned using data from the CMDB module 210, which comprises configurations for the communication module 230 on IPMI and management networks.

According to an embodiment, the Intelligent Platform Management Interface (IPMI) is a standard interface for managing and monitoring computer servers, particularly out-of-band, directly at the hardware level. It enables remote access to various system management features such as power control, temperature monitoring, fan speed control, and BIOS settings. IPMI uses its own dedicated network interface and protocol, allowing administrators to manage servers even when they are not in an active operating system state or when there is a network outage.

According to an embodiment, the server management module 270 comprises at least:
- a control plane component configured to discover and present servers 11, preferably un-provisioned servers, to the deployment module 220 as compute resources, and further configured to integrate encryption;
- a management module (IPA), embedded in an operating system, configured to communicate with the control plane to perform encryption and decryption tasks, manage disks, and establish communication with the control plane.

According to an embodiment, the server management module 270 is configured to manage and integrate un-provisioned servers 11 into the computing environment managed by the deployment module 220. Preferably, its primary functions comprises:
- Discovering and presenting servers 11 to the deployment module 220 as compute resources: its control plane component is responsible for discovering and presenting unprovisioned servers 11 to the deployment module 220, making them available as compute resources.
- Integrating self-encrypting drives (SEDs): the server management module 270 includes a mechanism for managing and integrating Self-Encrypting Drives (SEDs) into the server management process. This ensures that data remains secure by encrypting the drives before they are deployed into the computing infrastructure 10.
- Managing encryption keys: the server management module 270 is configured to manage encryption keys assigned to each host, disk, or client in the computing infrastructure 10 and uses the key management module 280 to manage these keys.
- Secure boot: the server management module 270 supports secure boot for the computing infrastructure 10 components by generating unique signatures for operating system images, storing them in the key management module 280, and validating that only signed operating system images are loaded during server boot.
- Communication with IPA: The management module IPA embedded in an operating system communicates with the control plane to perform encryption and decryption tasks, manage disks, and establish communication with the control plane.

According to an embodiment, the key management module 280 is configured to manage encryption keys for data protection. Its primary functions can comprise:
- Managing encryption keys: the key management module 280 is configured to store and manage encryption keys for various components of the computing infrastructure 10, such as servers 11, disks, and clients. It ensures that only authorized users have access to these keys.
- Securely storing keys: the key management module 280 is configured to use secure storage mechanisms to store encryption keys, ensuring that they are protected against unauthorized access or theft.
- Key rotation: the key management module 280 is configured to support key rotation, which is the process of periodically replacing old encryption keys with new ones to enhance security.
- Integration with other modules: the key management module 280 is configured to integrate with other components of the present technology to manage encryption keys for these modules and ensure secure communication between them.
- Key access control: the key management module 280 is configured to provide fine-grained access control for encryption keys, allowing administrators to grant or deny access based on specific roles or users.
- RESTful API: the key management module 280 is configured to offer a RESTful API that enables easy integration with other components of the present technology and external applications.
- Support for multiple key types: the key management module 280 is configured to support various types of encryption keys, such as RSA, AES, and ECDSA, to cater to different use cases and requirements.
- Key versioning: the key management module 280 is configured to maintain a record of key versions, allowing administrators to roll back to previous versions if needed.

According to an embodiment, the network virtualisation and orchestration module 290 is configured to manage and configure virtual networks within the computing infrastructure 10. Its primary functions can comprise:
- Creating and managing virtual networks: the network virtualisation and orchestration module 290 is configured to enable the creation and management of virtual networks, subnets, routers, firewalls, load balancers, and other related networking components within the deployment module 220.
- Virtual Local Area Network (VLAN) configuration: the network virtualisation and orchestration module 290 is configured to configure VLANs for network interfaces during the server discovery process to ensure proper communication between servers 11 and network devices.
- Dynamic Host Configuration Protocol (DHCP) services: the network virtualisation and orchestration module 290 is configured to manage DHCP services, which assign IP addresses and other relevant configurations to servers 11 during the discovery process.
- Network security: the network virtualisation and orchestration module 290 is configured to provide networking security features such as firewalls, security groups, and access control lists to protect the virtual network infrastructure from unauthorized access or attacks.
- Load balancing: the network virtualisation and orchestration module 290 is configured to offer load balancing capabilities to distribute network traffic across multiple servers for improved performance and availability.
- Network automation: the network virtualisation and orchestration module 290 is configured to automate various networking tasks, such as configuring interfaces, creating subnets, and managing routing tables, to simplify the deployment and management of virtual networks.
- Integration with other modules: the network virtualisation and orchestration module 190 is configured to integrate with other components of the present technology, including the CMDB module 210, and the Network Operations Gateway module (NOG) 250, to ensure seamless communication and coordination between different parts of the computing infrastructure 10.

According to an embodiment, the present technology also comprises calculating 120 data for initializing the CMDB module 210 and configuring at least a part of the software components using the configuration module 240.

According to an embodiment, the present technology also comprises:
- initialising the CMDB module 210 with the calculated data,
- configuring DNS module 260 with configurations from the CMDB module 210,
- determining configurations for the communication module 230, and
- configuring the switch 12 to allow its provisioning based on the calculated data from the CMDB module 210.

According to an embodiment, at least one network stack is provisioned using provisioning data from the CMDB module 210.

Preferably, this provisioning process involves:
- provisioning the DNS module 260, and the Network Operations Gateway (NOG) module 250,
- declaring at least one network in the deployment module 220, and
- synchronizing the deployment module 220 with the CMDB module 210 to start a server discovery process using the communication module 230.

According to an embodiment, the un-provisioned server 11 is booted to be discovered by the deployment module 220. Once the server 11 is discovered, it becomes manageable by at least one user.

According to an embodiment, the discovery process of a new server 11, i.e. a new un-provisioned server, comprises at least three steps: Initialization, Discovery, End of discovery.

Preferably, during the initialisation step of the discovery process, the new server 11 is powered off and unknown to both the deployment module 220 and the Configuration Management Database (CMDB) module 210. Network interfaces on the new server 11 are then configured in a discovery virtual local area network mode (VLAN) by the network virtualization and orchestration component 290. Once the new server 11 is powered on, it boots through the network and loads an agent that analyzes the hardware and generates a report. This report is sent to the deployment module 220, which synchronises the information with the CMDB module 210 using the communication module 230.

Preferably, in the discovery step, the new server's hardware is analyzed by the agent, and its configuration data is reported back to the deployment module 220. The deployment module 220 uses this information to create virtual networks, ports, and other necessary configurations for the new server. Once all configurations are in place, the new server 11 becomes discoverable and manageable by the user.

Preferably, during the end of discovery step, the network interfaces are unconfigured from the Discovery VLAN using the network virtualization and orchestration component 290 and put in an isolation mode, i.e. in quarantine. This is done to ensure security by preventing unauthorised access to the newly discovered server. Advantageously, if a server 11 is deleted from the deployment module 220 database, the corresponding entry in the CMDB module 210 will also be deleted, and the discovery process will be set back for that server 11. This step helps maintain an accurate inventory of servers and their configurations within the data center infrastructure.

Preferably, the discovery process also involves managing IP addresses within the computing infrastructure 10. Pre-calculated IP addresses based on a set of rules such as template, subnet mask and number of hosts per subnet are stored and transmitted to the appropriate components in the network through the communication device 230. Each IP address is related to a template associated with a specific function within the computing infrastructure 10. This dynamic process ensures that all new servers 11 and switches 12 are assigned unique IP addresses, enabling seamless integration into the computing infrastructure 10 network.

The present technology focuses on an innovative method for deploying and managing data centres through autonomous initialisation and configuration processes. The approach encompasses several aspects, which include:
- Initialization of Data Center Networks: This aspect concerns the automatic initialisation of network configurations in a data centre, preferably using pre-generated YAML files that can contain the necessary information to configure network equipment.
- Control Mechanism for Request Instantiation and Real vs. Logical Configuration Comparison (Ironic and Netbox): This qspect revolves around the control mechanism that enables request instantiation in a data centre by comparing real configurations with their logical counterparts using tools like a server management module (Ironic) and the CMDB module (Netbox).
- Execution of Configuration in Parallel (Ironic): This aspect involves the parallel execution of configuration tasks using the server management module (Ironic) when a new server is added to the data center.
- Method of Synchronization of Several Controllers (Netbox, OpenStack): This aspect deals with synchronizing multiple controllers in a data center environment, specifically the CMDB module Netbox and the deployment module OpenStack, to maintain consistency between the physical network configuration and the virtualized network configurations managed by OpenStack.
- Provisioning of Configuration of Equipment in Parallel (Netbox, OpenStack): This fifth technology involves the parallel provisioning of configurations for multiple pieces of equipment in a data center using Netbox and OpenStack to quickly integrate new equipment into the existing infrastructure without causing unnecessary downtime or configuration conflicts.

The present technology also includes an optional aspect for encryption for data protection using Self-Encrypting Drives (SEDs) and at least one server management module (Ironik), the logistic stack used for bare-metal deployment and management, to manage encryption keys and ensure that all new servers are encrypted before being deployed into the data centre.

According to an embodiment, an IP address is assigned as a function of termination for Virtual Extensible LAN (VXLAN) and Border Gateway Protocol (BGP). Preferably, this IP address functions as the intermediary address between two networked devices in a dynamic mode.

According to an embodiment, IP addresses between network devices are pre-calculated and assigned to their respective interfaces within the Configuration Management Database (CMDB) module 210. Once in CMDB module 210, the present technology is configured to allow the retrieving of the interconnections between network devices and thus obtain the necessary information to establish routing protocol BGP connections. Advantageously, to set up a BGP session, it is preferable to know the Autonomous System Number (ASN) of the device on the other end for the BGP peer configuration.

According to an embodiment, pre-calculating IP addresses for network devices and assigning them to their respective interfaces within the CMDB module 210 enables to effectively identify connections between devices and configure BGP sessions, preferably with the required ASN information. Advantageously, this streamlines the process of managing a complex network infrastructure while ensuring accurate and consistent routing configurations.

According to an embodiment, the Intelligent Platform Management Interface (IPMI) is configured for managing servers within a computing infrastructure. Advantageously, this setup enables efficient and centralized control over server operations.

According to an embodiment, the present technology allows for minimal footprint automated infrastructure deployment through the use of compact and efficient hardware components and streamlined software processes. This enables quick and easy implementation in various environments with limited space or resources.

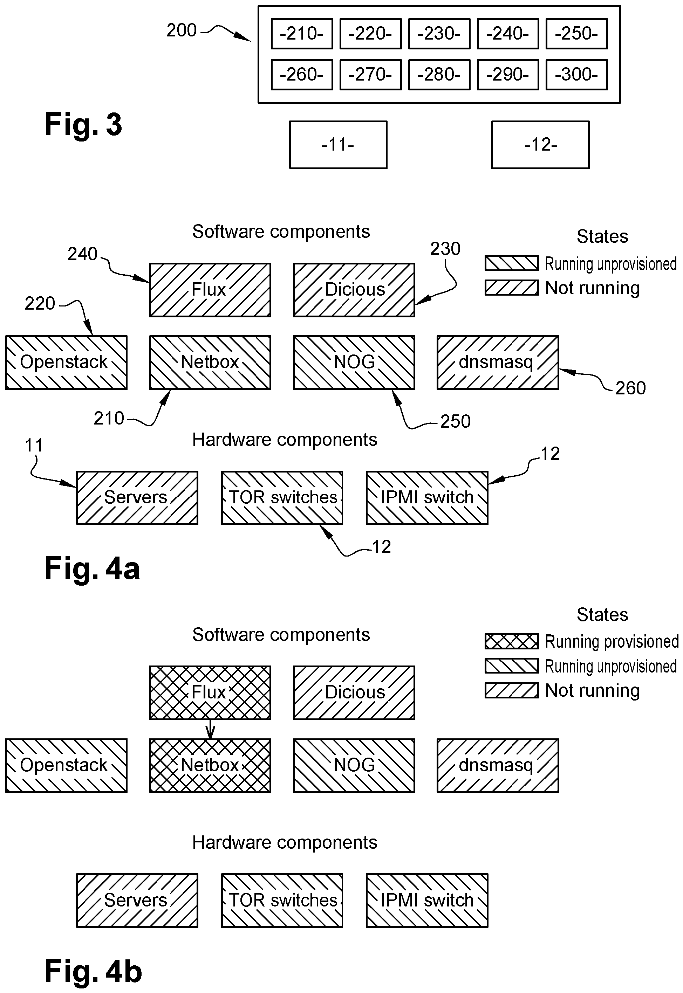

According to an embodiment, Figures 4a to 4f provide an illustrated representation of some steps involved in the computer-implemented method for automated deployment of at least one computing infrastructure according to the present technology.

In figure 4a, the configuration module 240, Flux, is shown sending data to the CMDB module 210, Netbox. This data includes information about the un-provisioned server 11 and switch 12 that are yet to be deployed in the computing infrastructure 10. The communication module 230, Dicious, which manages communication between various software components, facilitates this transfer of data from the configuration module 240 to the CMDB module 210.

In figure 4b, the CMDB module 210 receives the data sent by the configuration module 240 and uses it to configure the Domain Name System (DNS) module 260, DNSMasq. The communication module 240 manages the DHCP interface for the DNS module 260 during this process. This step ensures that the DNS services in the computing infrastructure 10 are properly configured, enabling efficient name resolution and network functionality.

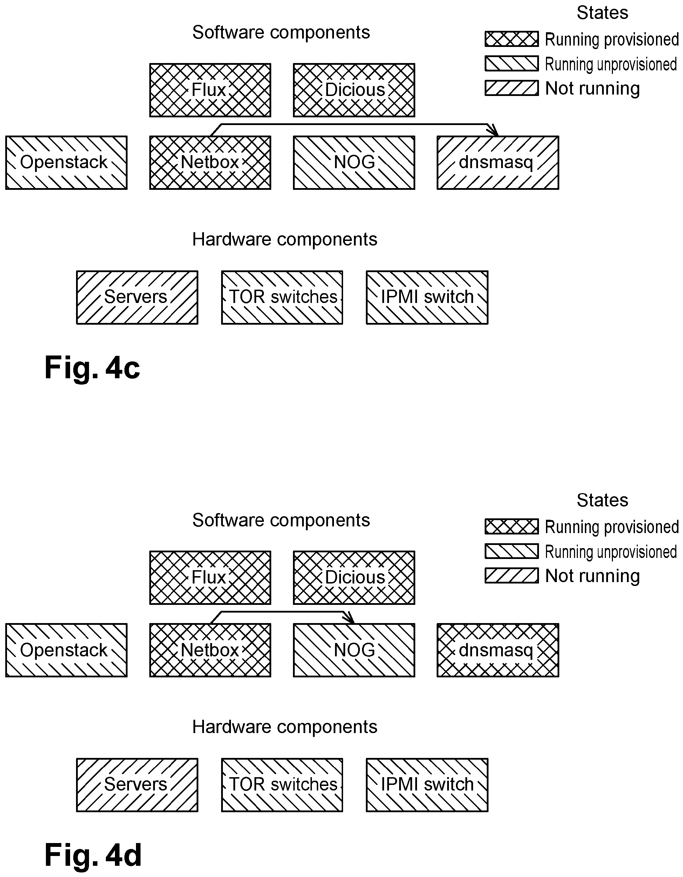

In figure 4c, the CMDB module 210 sends data to the Network Operations Gateway (NOG) module 250. The NOG module 250 is responsible for piloting the switch 12 by receiving configurations from the CMDB module 210 and applying them to the switch 12. This process automates the configuration of switches 12 in the network infrastructure 10, ensuring consistent and accurate configurations across all switches 12.

In figure 4d, the deployment module 220, OpenStack, receives instructions from the CMDB module 210 regarding the inventory data of the un-provisioned server 11 and switch 12. The deployment module 220 provisions the network stack with this information, pushing the configurations onto the switches 12 after boot. This step automates the deployment process, reducing the time and effort required for manual configuration and provisioning.

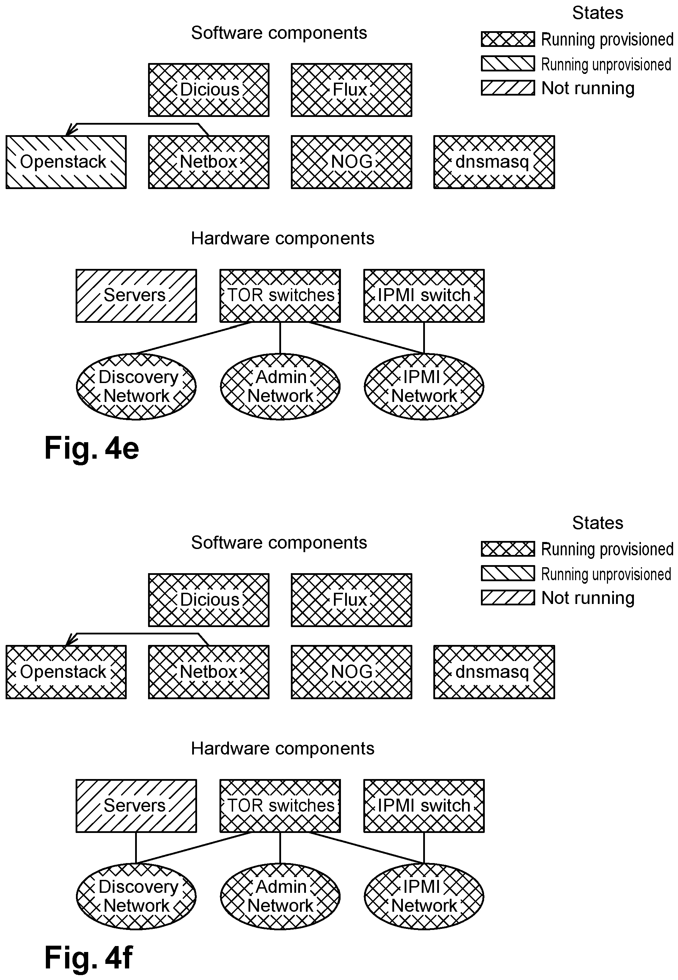

In figure 4e, the servers 11 and switches 12 are shown being provisioned using the data from the CMDB module 210. The deployment module 220 initializes the un-provisioned server 11 by installing an operating system image and other necessary configurations. The network stack is also configured, including virtual interfaces, IP addresses, and routing tables.

In figure 4f, the servers 11 are discovered by the deployment module 220 using a server management module 270, Ironic. This discovery process involves initializing the server 11 with an operating system image and other configurations, registering it with the CMDB module 210, and enriching its inventory data. The communication module 230 manages this process by managing DHCP interfaces and allowing communication between the CMDB module 210 and the deployment module 220. Once the server 11 is discovered, it becomes manageable by users within the computing infrastructure 10.

According to an embodiment, the deployment module is configured to perform certain functions. Preferably, this deployment module 220 is capable of detecting at least one new server, i.e. un-provisioned server 11, using the communication module 230.

Advantageously, upon detection of a new server 11, the deployment module 220 sends the port number and switch 12 number of the new server 11 to the Configuration Management DataBase (CMDB) module 210 via the communication module 230.

Furthermore, according to an embodiment, once the new server 11 has been successfully added to the CMDB module 210, the deployment module 220 removes the discovery mode of the new server 11 using the communication module 230.

According to an embodiment, the present technology is configured to use switches 12 from distinct manufacturers, such as Arista or Cisco, for example. Preferably, the network infrastructure 10 employs a diverse range of components for enhanced reliability and interoperability. Advantageously, incorporating switches 12 from different manufactures allows for flexibility in design and potential cost savings.

The use of switches 12 from distinct manufacturers may provide several technical advantages:
- Interoperability: Switches 12 from various manufacturers may have unique features or capabilities that can enhance the overall network performance when used together.
- Redundancy: Having switches 12 from multiple sources ensures a more robust and resilient infrastructure, as components from different vendors are less likely to fail simultaneously.
- Cost savings: By utilizing switches 12 from various manufacturers, organizations may be able to negotiate better pricing or find cost-effective alternatives for specific network requirements.

According to an embodiment, the deployment module 220 comprises the network virtualization and orchestration component 290, Neutron. This component enables creation and management of virtual networks, subnets, routers, firewalls, load balancers, and other networking components within the deployment module 220.

According to an embodiment, the present technology comprises a step of managing server deletion in the computing infrastructure 10. Preferably, the step of managing server deletion comprises the following sub-steps
- Deleting a server 11 from the deployment module 220;
- Deleting the corresponding entry of the server in the Configuration Management Database (CMDB) module 210;
- Setting back the discovery process in the CMDB module 210.

According to an embodiment, deleting a server from the deployment module 220 results in the automatic deletion of the corresponding entry in the CMDB module 210. Advantageously, this feature ensures that the configuration management database remains up-to-date with the current state of the computing infrastructure 10. According to another embodiment, the method may include additional steps such as verifying the identity of the user requesting the server deletion or confirming that all dependent resources are removed before initiating the deletion process. Advantageously, these features enhance the security and reliability of the computing infrastructure by ensuring proper handling of dependencies and preventing unintended consequences during server deletions.

According to an embodiment, the present technology comprises a step for securing computing infrastructure 10 components. Preferably, the method comprises ensuring secure boot and/or disk encryption. Advantageously, the present technology can comprise a step of deploying software images. According to an embodiment, secure boot is implemented during the deployment process to ensure that only authorised software is loaded onto the servers. This prevents unauthorised code from running and helps protect against malware attacks. According to an embodiment, disk encryption can also be applied to safeguard data stored on servers 11.

According to an embodiment, the present technology comprises discovering at least one bare-metal server, i.e. un-provisioned server 11, using the server management module 270, such as Ironic. This step allows identifying servers 11 that do not have an operating system installed and are directly accessible at the hardware level. Advantageously, the discovered bare-metal server 11 is presented to the deployment module 220 as a compute resource. The presentation occurs through the server management module 270. This integration enables automated deployment of software on the bare-metal server 11. Preferably, self-encrypting drives (SEDs) are integrated into the server management module 270. These drives provide hardware-level encryption for data stored on them. The present technology is configured to assign unique encryption keys to each host and/or disk and/or client of the computing infrastructure resources. Advantageously, a key management module 280, such as Barbican, manages the assigned unique encryption keys. This ensures secure storage and access to the encryption keys. The encryption is transparent to the operating system, allowing for seamless integration within the computing infrastructure 10.

According to an embodiment, the server management module 270 comprises a control plane component. This component is configured to discover and present servers 11 to the deployment module 220 as compute resources. Preferably, it is further configured to integrate encryption. Additionally, according to an embodiment, the server management module 270 comprises a management module (IPA), which is embedded in an operating system. This management module IPA communicates with the control plane component to perform encryption and decryption tasks, manage disks, and establish communication with the control plane.

According to an embodiment, the present technology comprises a step of securely booting operating systems in the computing infrastructure 10. The present technology can comprises the following sub-steps:
- Generating unique signatures for operating system images;
- Storing the unique signatures in a key management module 280, such as Barbican;
- Validating that only signed operating system images are loaded during the booting of at least one server 11;
- Executing an integrated mechanism into the server management module 270, like Ironic, to perform the validation.

Advantageously, the operating system images are signed by a trusted platform or a trusted provider before being stored and validated. This ensures the authenticity and integrity of the operating system images during the booting process.

According to an embodiment, the key management module 280 is configured to securely store the unique signatures using cryptographic techniques to maintain their confidentiality and prevent unauthorised access. Preferably, the validation step can comprise comparing the stored signatures with the ones generated by the operating system images during the booting process. If a match is found, the server 11 deploys the operating system image; otherwise, it halts the boot process to prevent potential security threats.

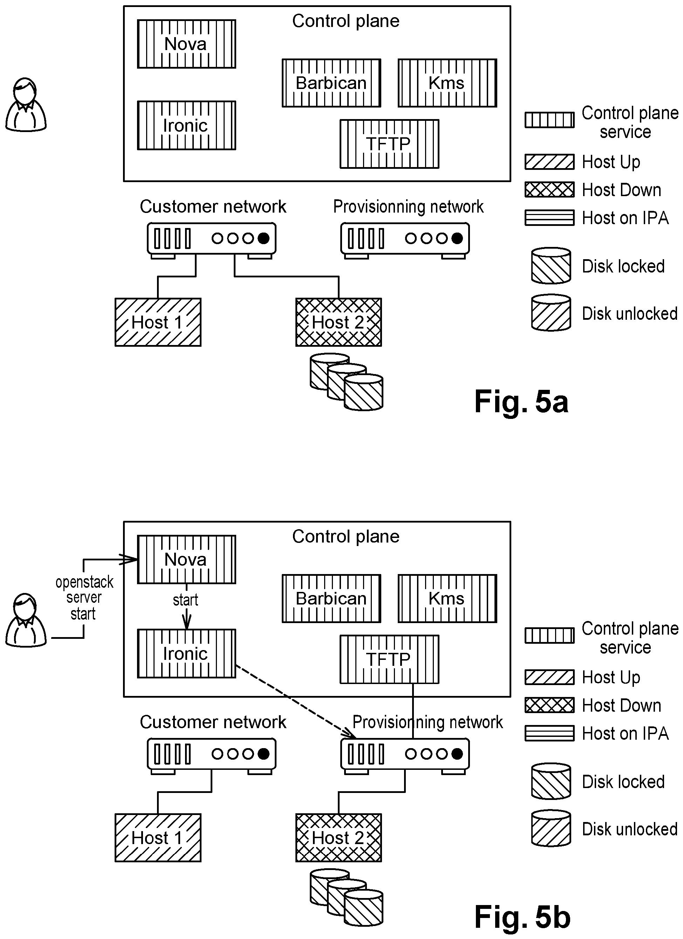

According to an embodiment, the figures 5a to 5k illustrate the steps involved in transitioning from an unprovisioned server 11 to a provisioned one and the recycling process for decommissioning servers 11 using the server management module 270 in the context of deploying and managing at least one computing infrastructure 10. The figures demonstrate various stages, including connecting the server 11 to the provisioning network, booting on IPMI, unlocking disks, switching back to user mode, deleting the server 11, and encrypting SEDs during the recycling process.

In Figure 5a, the initial state of a computing infrastructure is depicted with several software components, such as NOVA, IRONIC, Barbican, KMS, and TFTP. A customer network is connected to two hosts, some disks are locked, and a provisioning network is present. Preferably, NOVA is related to an orchestrator module configured to orchestrate compute resources. Preferably, KMS is a key management system that can be connected or included into the key management module 280, called Barbican. Preferably, TFTP is a file transfer module configured to manage the transfer of files.

In Figure 5b, Nova sends a request to Ironic to start the baremetal node by connecting it to the provisioning network. Ironic reconfigures the host interface to switch it to the provisioning network.

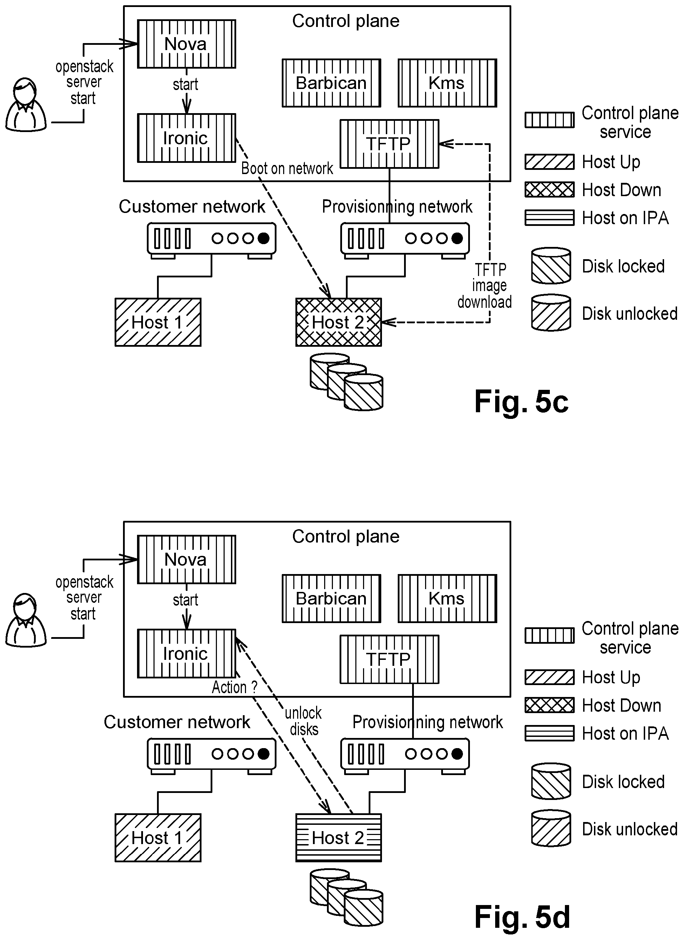

Figure 5c illustrates the boot process of the server on IP Address Management Interface (IPMI) over the network using PXE boot or iPXE. The host downloads the image from the TFTP server during this boot process.

In figure 5d, the Ironic Python Agent image is executed on the host. It asks the control plane for instructions and receives a command to load the "Unlock Disk" feature.

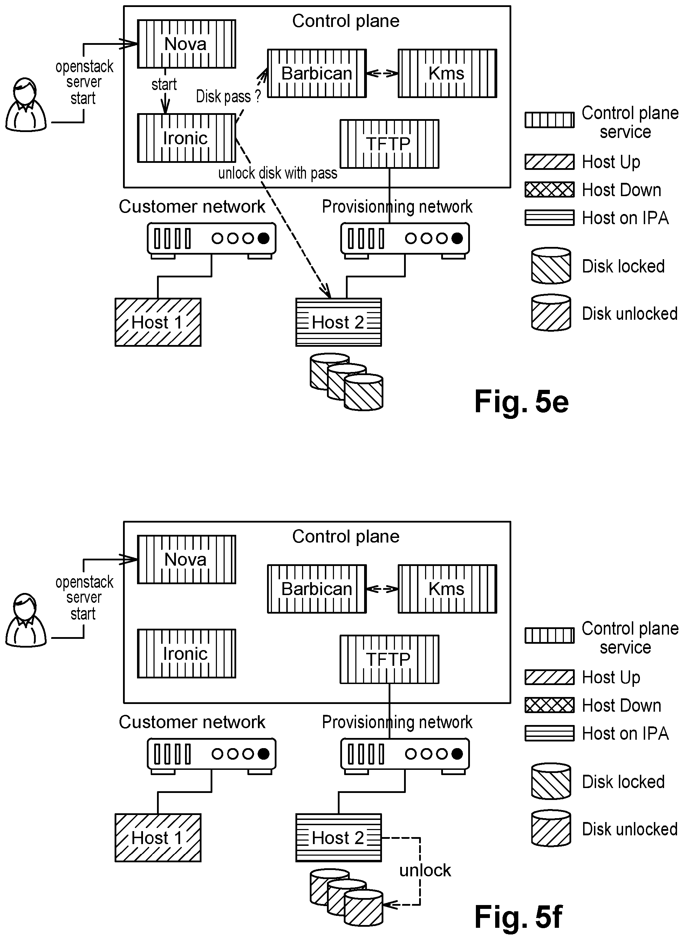

Figure 5e shows IPA using the instructions from Ironic to unlock all disks using a given key obtained from Barbican and stored in KMS.

In figure 5f, IPA is configured to unlock all disks with the provided key, preferably using OPAL-API.

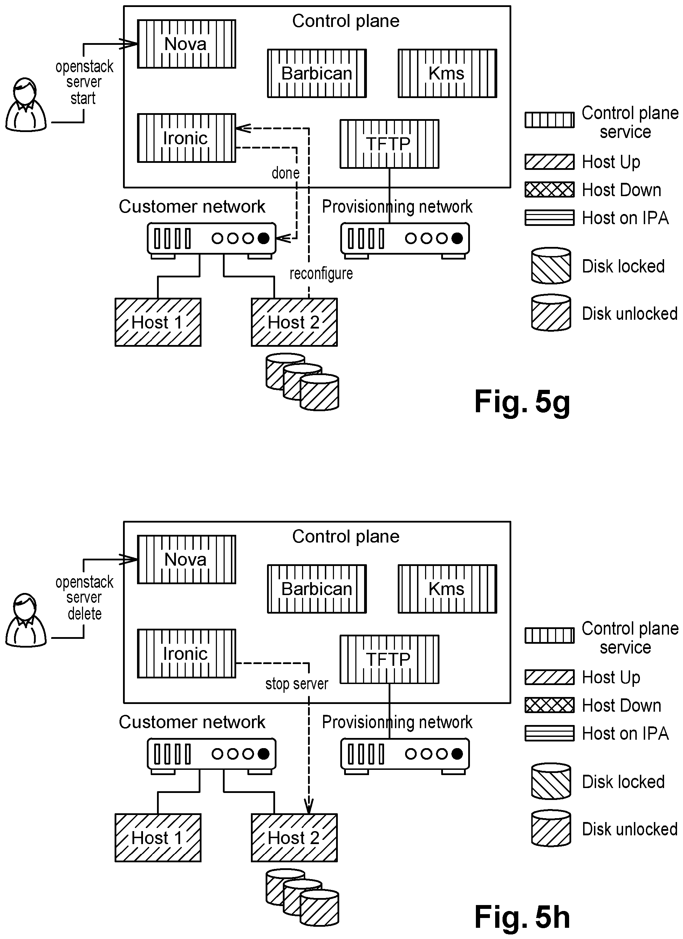

Figure 5g represents the "switch back to user" step where IPA informs Ironic that the job has been completed successfully, and a soft reboot is initiated. Ironic removes the network configuration and puts the host back on the customer network.

Figures 5h through 5k demonstrate the recycling server process. In figure 5h, a customer sends a delete command to Nova, which then sends the delete request to Ironic. Ironic sends a stop command to the server.

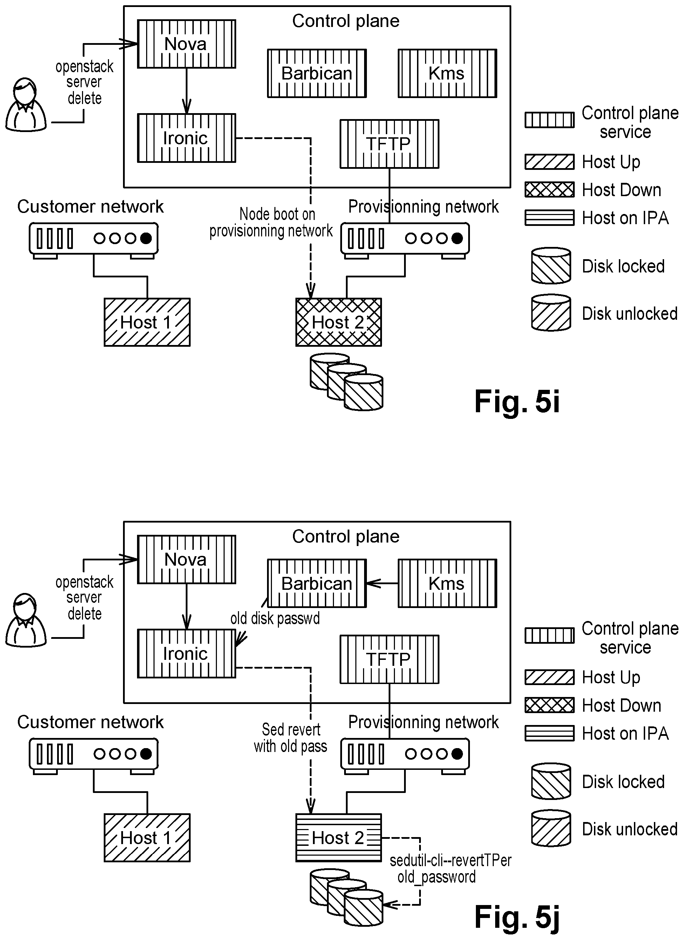

In figure 5i, the boot process is initiated again on IPMI for the recycling process. When the server is off, Ironic reconfigures the network to put it on the provisioning network.

Figure 5j represents the "SEDs revert to factory" step where SEDs are reset to their factory settings.

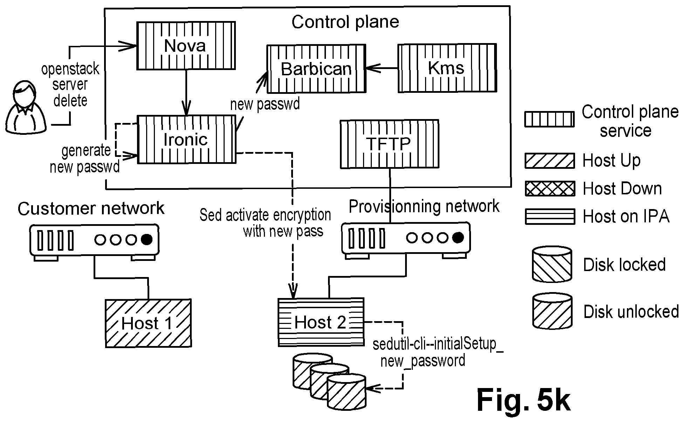

In figure 5k, the "SEDs re-encrypt" step is shown, where SEDs are encrypted using a new encryption key.

In the context of Figures 5a to 5k, the initial state (Figure 5a) sets up the environment with various modules and networks. The "connect server to provisioning network" step (Figures 5b and 5c) initiates the process by requesting Ironic to start the bare-metal node and reconfiguring the host interface to switch it to the provisioning network. The host then boots over the network and downloads the image from the TFTP server.

The "execute Ironic Python Agent image" step (Figures 5d to 5f) instructs IPA on how to unlock all disks using a given key, which is retrieved from Barbican and passed to IPA. IPA then uses "sedutil-cli" to unlock the disks. The "switch back to user" step (Figure 5g) informs Ironic that the job has been completed successfully and initiates a soft reboot, removing the network configuration and putting the host back on the customer network.

The "recycling server" process (Figures 5h to 5k) involves deleting the OpenStack server, booting it on IPA, reverting the SEDs to their factory settings, encrypting them with the latest encryption keys, and continuing with the cleaning process. This process ensures efficient management of resources in a large-scale data center environment while maintaining security and flexibility.

According to an embodiment, the present technology can comprise an integrated mechanism for managing signatures and versioning. Preferably, the integrated mechanism is designed as a software component. This mechanism enables the tracking and management of various versions of data or information, ensuring that only authorised and authenticated changes are implemented. Advantageously, this feature enhances data security and integrity by providing a reliable means to maintain a record of all modifications made to the system or apparatus over time. Additionally, it allows for efficient version control, enabling users to easily revert to previous versions if necessary.

According to an embodiment, the present technology comprises a step of logging data. Preferably, this logging step records events for subsequent analysis. According to another embodiment, the present technology comprises a monitoring step. In this step, real-time or periodic observation of a system or process is carried out. Advantageously, the present technology may incorporate an auditing step. This step involves reviewing logs and other data to ensure compliance with policies or regulations. Security is another feature that can be incorporated into the present technology, as previously described. Preferably, this security aspect includes measures for protecting data from unauthorised access or manipulation.

According to an embodiment, the present technology comprises a step of reporting a state of a server in the computing infrastructure, the step comprising at least the following sub-steps:
- discovering the server using a server management module,
- retrieving configuration data from a Configuration Management Database (CMDB) module, and
- generating a report comprising the discovered information and the retrieved configuration data, preferably the report is then transmitted to an administrator or a monitoring system for further analysis and action.

According to an embodiment, the computing infrastructure 10 can comprise a private network for server discovery. Preferably, the private network is implemented as a local area network (LAN) and/or a wide area network (WAN) that is owned and operated by a user or an organization. Advantageously, using a private network for server discovery provides increased security and control over the discovery process compared to using public networks. The private network can be configured with access controls and firewalls to restrict unauthorized access and prevent potential attacks. Additionally, the use of a private network allows for faster and more reliable communication between servers on the network.

Advantageously, the use of a private network for server discovery can be particularly beneficial in environments where security and reliability are critical, such as in financial services, healthcare, or government applications. By controlling the discovery process within a private network, organizations can reduce the risk of unauthorized access or data breaches that can occur when using public networks for discovery. Additionally, according to an embodiment, the present technology can comprise implementing load balancing and failover mechanisms to ensure high availability and fault tolerance of the server infrastructure. Preferably, these mechanisms are integrated with the private network and can automatically detect and redirect traffic to available servers in case of failures or overload conditions.

According to an embodiment, the present technology comprises a step of managing Internet Protocol (IP) addresses in a computing infrastructure. This step can comprise the following sub-steps:
- Pre-calculating all required IP addresses based on a set of rules, such as template, subnet mask and number of hosts per subnet;
- Storing the calculated IP addresses;
- Transmitting the stored IP addresses to the appropriate components in the network through the communication module;

Preferably, each IP address is related to a template associated with a specific function within the computing infrastructure. Advantageously, this step of managing IP addresses can be dynamically updated as needed.

In more detail, according to an embodiment, this step begins by determining the necessary IP addresses based on predefined rules such as subnet mask and number of hosts per subnet. These calculations are performed offline and the resulting IP addresses are stored for later use. When required, the calculated IP addresses are transmitted to the appropriate components in the network through the communication module 230. Advantageously, each IP address is associated with a specific template that defines its function within the computing infrastructure 10. For example, an IP address used for a web server may be associated with a template that includes port numbers and other relevant configuration information. This allows for easy management and configuration of network components.

Furthermore, IP addresses can be dynamically updated to accommodate changes in the network environment. For instance, if a new component is added to the network, its IP address can be calculated and transmitted to the appropriate module and/or device using the present technology. Similarly, if an existing IP address needs to be changed, the calculation can be re-run and the updated IP address can be transmitted accordingly.

It has to be noticed that IP addresses must be provisioned, or reserved, when setting up the configuration of a new server 11. Failure to do so may result in connectivity issues between devices. Traditional methods of using IP auto-addressing services like DHCP are suitable for simple interfaces such as management networks but not for interconnecting network devices.

The presented solution aims to simplify the process of configuring network devices in a data center environment by utilizing templates.

For example, the present technology can comprise a first and a second template.

Preferably, the first template, referred to as "device types," can be configured to define the interfaces and their roles for various device types.

Preferably, the second template, named "network prefixes per roles," can be configured to specify IP address ranges available for different roles.

This approach streamlines the configuration process by automating the assignment of interfaces and IP addresses based on a device's role and type.

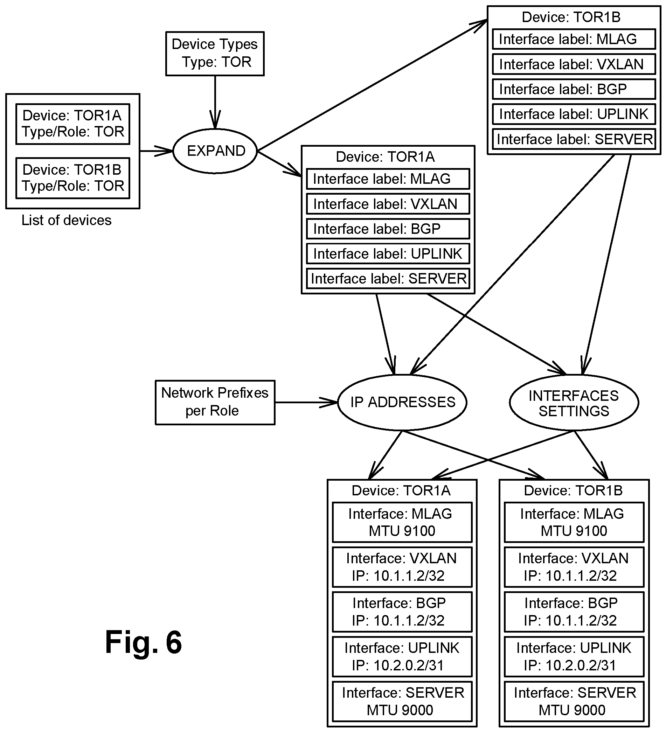

Figure 6 illustrates the workflow switch configuration. This workflow begins with providing a list of devices, such as switches and/or servers, along with their respective roles and types.

According to an embodiment, the first step in the process is to expand the given devices using the "device types" template. This expansion results in devices having their associated interfaces labeled. Subsequently, two parallel processes are initiated. These processes parse the interface lists for each device and determine IP addresses based on the device's role and label. By utilizing templates and parallel processing, the solution efficiently generates a high-level configuration file for network devices.

Preferably, the first step in the workflow involves providing a list of devices, including switches and their respective roles and types. This information is crucial for determining the interfaces and IP addresses required for each device based on its role within the network infrastructure.

Next, the configuration process begins by expanding the given devices using the "device types" template. This expansion results in a more detailed representation of the devices, including their associated interfaces labeled according to their roles. For instance, if we have a switch with the role of a Top-of-Rack (ToR) switch, its interface labels would be defined based on the device types of template for ToR switches.

Following this expansion step, two parallel processes are initiated: one for parsing the list of interfaces per device and another for calculating IP addresses and completing specific attributes based on the role of the device and the label of the interface. These processes run concurrently to optimize efficiency in the configuration process.

The first parallel process, which handles interface parsing, determines the IP addresses and other relevant configurations for each interface based on its label and the role of the device it is associated with. For example, if an interface is labeled as a management interface, it would be configured using the network prefixes per roles template for management interfaces.

The second parallel process, which handles IP address calculation and attribute completion, uses the "network prefixes per roles" template to determine the available IP address ranges for each role. Based on this information, it calculates the specific IP addresses required for each interface based on its label and the role of the device it is associated with. Additionally, it completes any other necessary attributes for the interfaces, such as VLANs or subnet masks.

Once both parallel processes have completed their tasks, a high-level configuration file for the network devices is generated. This file contains all the necessary information to configure the switches and other network devices within the data center infrastructure. The figure 6 illustrates this workflow in a clear and concise manner, highlighting the importance of templates and parallel processing in optimizing the switch configuration process.

As previously mentioned, the advantages of this template-based solution comprise improved efficiency and reduced errors in configuring network devices. The automation of interface assignment and IP address calculation ensures consistency across the data center infrastructure. Additionally, the parallel processing of multiple devices allows for a more scalable approach to managing large numbers of devices. This solution offers organizations an effective way to manage their network configurations while maintaining security, reliability, and flexibility in their data center environment.

According to an embodiment, the present technology can be configured to manage a fleet of distributed computing infrastructure 10, i.e. data centers. Preferably, each computing infrastructure 10 in the fleet can be geographically dispersed and operates independently. Advantageously, the present technology comprises monitoring the performance of each computing infrastructure 10 in real-time and allocating workloads accordingly to optimize resource utilisation and improve overall system efficiency. Furthermore, the present technology may comprise implementing automated failover mechanisms to ensure high availability and disaster recovery capabilities. Additionally, the present technology can comprise integrating security measures to protect data and prevent unauthorized access to the data centers in the fleet. Moreover, the present technology may involve using advanced analytics and machine learning algorithms to predict and prevent potential issues before they occur, thereby reducing downtime and improving system reliability. Advantageously, the present technology can be implemented using a cloud-based platform or a decentralized network architecture for scalability and flexibility.

According to an embodiment, the present technology comprises a step of managing a fleet of distributed computing infrastructures, the step comprising at least the following sub-steps:
- deploying and configuring computing components in each computing infrastructure using automated processes;
- pulling configurations across all computing infrastructures;
- monitoring performance and resource utilization; and
- implementing security measures to protect against unauthorized access or data breaches;
- preferably, providing features such as logging, monitoring, auditing, and key management for distributed key management and auditing.

According to an embodiment, the present technology can be configured to mutualise at least one switch 12 between a plurality of deployment modules 220. Preferably, each deployment module 220 is an OpenStack environment. Advantageously, this arrangement allows for multiple Network Operating Gateways (NOGs) module 250 to utilize the same switch 12.

According to another embodiment, in the absence of mutualising switches 12 between NOGs 250, each NOG would require its own dedicated switch 12. This could lead to increased costs and complexity. Advantageously, one switch 12 can be shared among multiple NOGs 250. This reduces the overall number of required switches 12 and lowers costs. Furthermore, according to an embodiment, each client, i.e. user, is associated with a specific NOG 250. However, due to the mutualised switch 12 arrangement, multiple clients from different NOGs 250 may transmit data through the same switch 12 at different times. This does not cause any interference or conflicts, as the NOG 250 association ensures proper routing and management of the transmitted data.

According to an embodiment, the present technology can comprise a mutualisation step of managing network infrastructure in a computing infrastructure. Preferably, the step can comprise at least enabling multiple deployment modules 220 to share at least one switch 12 by synchronizing their configurations and allowing efficient utilization of resources.

According to an embodiment, the present technology relates to a computer-readable storage medium storing instructions for implementing the present technology, and therefore being configured to deploy and manage through autonomous initialization and configuration processes.

According to an embodiment, the first portion of the instructions on the computer-readable storage medium pertains to the automatic initialisation of network configurations in the computing infrastructure 10. This process can begin by pre-generating YAML files, which contain necessary information for configuring network equipment. These YAML files can be converted into usable configuration files using processes under Netbox and other tools and/or modules.

According to an embodiment, the second part of the instructions deals with the control mechanism that enables request instantiation in the computing infrastructure 10. This mechanism involves comparing real configurations with their logical counterparts using modules like Ironic 270 and Netbox 210, for example. Upon detection of a new server 11, OpenStack 220 initiates actions to configure it automatically, including installing the initial operating system image, registering the server 11 with Netbox 210, and enriching its inventory. Once the server's configuration is updated in Netbox 210, Dicious 230 generates network configuration files for OpenStack 220 to use, enabling the creation of virtual networks, ports, and other configurations required for the server to function correctly.

According to an embodiment, the third part of the instructions focuses on the parallel execution of configuration tasks using Ironic 270 when a new server 11 is added to the computing infrastructure. Ironic 270 manages power states, deploys operating system images and configurations, and provisions new servers with appropriate network configurations.

According to an embodiment, the fourth part of the instructions deals with synchronizing multiple controllers in the computing infrastructure 10 environment, specifically Netbox 210 and OpenStack 220. This synchronization is essential for maintaining consistency between the physical network configuration and the virtualized network configurations managed by OpenStack 220.

According to an embodiment, the fifth part of the instructions involves the parallel provisioning of configurations for multiple pieces of equipment in the computing infrastructure 10 using Netbox 210 and OpenStack 220. This process ensures that new equipment is quickly integrated into the existing infrastructure without causing unnecessary downtime or configuration conflicts.

According to an embodiment, an optional feature of the present technology relates to encryption for data protection. The objective is to ensure that sensitive information remains confidential even if the physical security of the servers is compromised. This encryption feature can be applied transparently at the disk level using Self-Encrypting Drives (SEDs) without requiring any modification to the operating system or application layer.

According to an embodiment, the processing sub-system 200500 can comprises a processing sub-sub-system 200 configured for implementing the automated deployment phase 100 of a computing infrastructure 10. This processing sub-system 200 comprises therefore at least one un-provisioned server 11 and at least one switch 12. The processing sub-system 200 also comprises the processor 300 and the computer-readable medium storing instructions that, upon being executed by the processor 300, cause the execution of various software components.

As previously described, according to an embodiment, the software components further comprise at least:
- a Configuration Management DataBase (CMDB) module 210, preferably configured to manage and store inventory data relating to the un-provisioned server 11 and the switch 12. Advantageously, this data can comprise IP addresses of switches 12, interfaces, VLANs, region names, and configuration templates;
- a deployment module 220, preferably configured to deploy the computing infrastructure 10. Advantageously it is configured to receive instructions from the CMDB module 210 regarding the inventory data of the un-provisioned server 11 and the switch 12. Then, the deployment module 220 provisions the network stack with this information, pushing the configurations onto the switches 12 after boot;
- a communication module 230, preferably configured to allow communication between the CMDB module 210 and the deployment module 220 and to manage at least one Dynamic Host Configuration Protocol (DHCP) interface module. Advantageously the communication module 230 initializes the discovery process by configuring interfaces in a Discovery VLAN using a server management module 270. Once the rack is provisioned, each server 11 is discovered at boot by the deployment module 220 and becomes manageable by a user;
- an configuration module 240, preferably configured to initialize the CMDB module 210 with information relating to the switch 12 and its configuration. This data can comprise IP addresses of switches 12, interfaces, VLANs, region names, and configuration templates. From this information, the configuration module 240 is configured to generate rendered configurations for DHCP services on IPMI and management networks, as well as for switches 12, allowing their provisioning;
- a Network Operations Gateway (NOG) module 250, preferably configured to pilot the switch 12 by receiving configurations data from the CMDB module 210 and applying the received configurations to the switch 12. This process ensures that the network infrastructure is properly initialized and configured during the deployment of the computing infrastructure 10;
- a Domain Name System (DNSMasq) module 260. DNSMasq 260 is configured to manage the DNS services in the computing infrastructure 10. It uses standard protocols like DHCP to answer requests from servers 11 and provides them with the necessary configurations.
- Optionally, a server management module 270, preferably configured to manage and control the provisioning, deployment, and lifecycle of un-provisioned servers 11 in the computing infrastructure 10 environment. It interacts with other components such as the deployment module 220 and the network virtualization and orchestration component 290, for example Neutron, to ensure seamless integration of new servers 11 into the existing infrastructure while maintaining security and consistency ;
- Optionally, a key management module 280, preferably configured to manage and securely store encryption keys for various components of the computing infrastructure 10, ensuring that only authorized users have access to these keys. It automates the process of generating, distributing, and rotating encryption keys during server provisioning and deployment;
- Optionally, a network virtualisation and orchestration module 290, called Neutron, preferably configured to manage and create virtual networks, subnets, routers, firewalls, load balancers, and other related networking components within the computing infrastructure 10. It enables the automation of network configuration and management tasks, ensuring efficient and consistent deployment and maintenance of network services in the computing infrastructure 10 environment.

According to an embodiment, the processing system 500 or the sub-system 200 can comprise at least one NOG master 251 and at least a plurality of NOG slaves 252. The NOG master 251 holds data about a plurality of switches 12, while each NOG slave 252 contains data about only one switch 12 from the plurality of switches 12. Preferably, in this multi-NOGs configuration, the master NOG 251 is capable of configuring all shared elements as it has knowledge of all switches 12. In contrast, each slave NOG 252 only possesses information regarding its respective switch 12 and does not have access to the configurations of other switches 12.

According to an embodiment, to address the challenges associated with managing large network fabrics using a single automation instance of a NOG in data centers, a new solution is required. Indeed, there is a need for multiple NOG instances to improve availability, resiliency, and security while maintaining the ability to share common information for local configuration management.

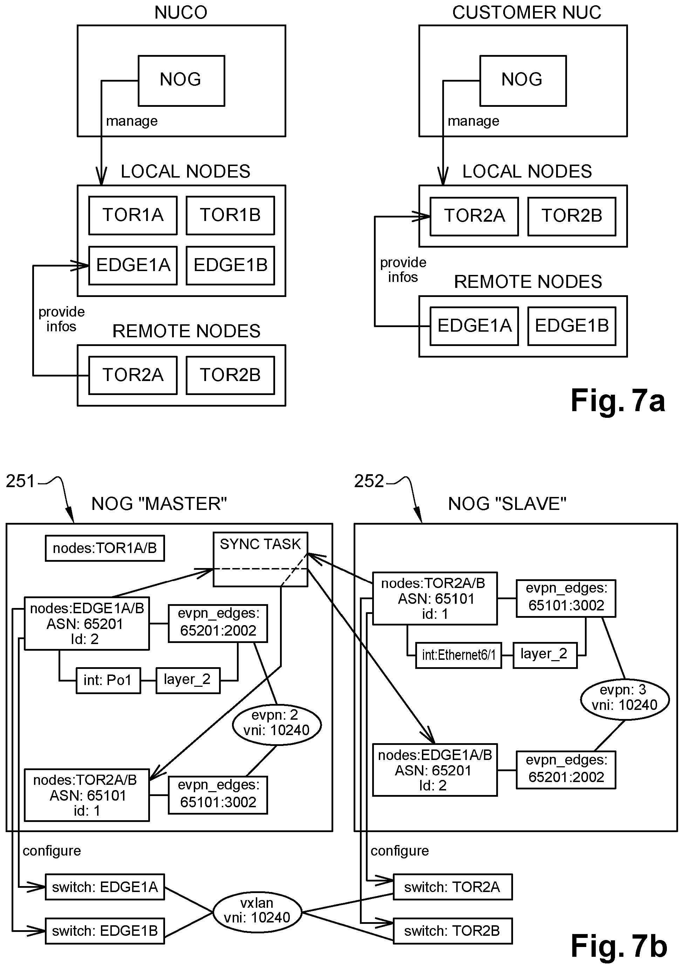

According to an embodiment, and as illustrated by figures 7a and 7b, the present technology offers to extend an existing NOG architecture to support multiple instances. Each MiniPod, i.e. group of racks, can run its local NOG instance with an associated orchestrator, for example, the deployment module 220, also called OpenStack. Preferably, a MiniPod is a group of a predetermined number of racks managed by the same deployment module 220. This setup eliminates the need for a centralized single-point-of-failure instance and allows for better management of different areas of responsibility within the network fabric.

One key advantage of this solution is that there will be no direct interaction between shared devices and local instances, which significantly reduces the attack surface and enhances security. However, it's essential to ensure that these local instances can still manage their local configurations effectively.

According to an embodiment, to achieve this goal, the present technology provides a mechanism for sharing common information between the local NOG instances. This could be accomplished through a centralized database or a distributed data store accessible to all instances. By enabling each instance to access and utilize the shared information, they will be able to manage their local configurations while maintaining consistency with the overall network fabric configuration.

According to an embodiment, the proposed solution for managing computing infrastructure networks comprises splitting the Network Operations Gateway (NOG) into central, i.e. master, and local, i.e. slave, instances, each managed by a separate orchestrator. This design allows for better availability, resiliency, and security as it eliminates the need for a single-point-of-failure instance and enables different areas of responsibility within the network fabric. The central NOG instance, hosted on the main controller (NUC0), manages local TOR (Top-Of-Rack) and EDGE devices, while each customer controller hosts a local NOG instance to manage its dedicated TOR devices.

Figures 7a and 7b are diagrams that illustrate the concept of multiple instances of Network Operations Gateways (NOGs) in a computing infrastructure 10 according to an embodiment of the present technology. These figures demonstrate how a central NOG instance manages local TOR (Top-Of-Rack) devices and EDGE devices, while each customer controller hosts a local NOG instance to manage its dedicated TOR devices.

According to an embodiment, and as illustrated by figure 7a, in this high-level design, the central NOG instance is responsible for managing local TOR and EDGE devices, providing network services connectivity with external networks or devices. The local NOG instances, on the other hand, manage their respective dedicated TOR devices, enabling customers to manage their own local network resources through their local NOG instance. To facilitate sharing information for building shared services, NOG instances can declare a node as "remote," which does not require configuration management.

The benefits of this solution include improved availability and resiliency due to the elimination of a single-point-of-failure instance and the ability to manage different areas of responsibility within the network fabric. Additionally, the design offers enhanced security as each customer has control over its local network resources through its dedicated NOG instance. The capability to share information between instances allows for the building of shared services while minimizing direct interaction between shared devices and local instances.

According to an embodiment, the Local NOG, also called the slave NOG, is responsible for managing the Top-of-Rack (ToR) devices within a rack, while being aware of remote nodes outside its scope but unable to change their configurations. It is addressed by a local orchestrator. On the other hand, the Central NOG manages nodes that are located outside of racks or not managed by a Local NOG instance. The Central NOG creates and deletes services (evpnedges) on these nodes to allow configuration on the local ToR and is aware of ToR devices as remote nodes. It syncs tasks, pushes configurations, and manages these remote nodes when needed.

According to an embodiment, each Local NOG, i.e. the slave NOG, plays a role in managing the network infrastructure within a rack, ensuring that the ToR devices are configured correctly and functioning optimally. By being aware of remote nodes, it can utilize their information for local purposes but does not have the ability to change their configurations. This separation of responsibilities allows for better organization and management of the data center network. The Local NOG is a component allowing to maintain the overall network infrastructure while ensuring that each rack operates efficiently and effectively.

According to another embodiment, the Central NOG, i.e. the master NOG, on the other hand, focuses on managing nodes that are located outside of racks or not managed by a Local NOG instance. It acts as a central hub for managing extended services between local and remote nodes. It enables configuration on the local ToR devices. The Central NOG's ability to sync tasks and manage remote nodes ensures that the entire data center network remains consistent and cohesive. This separation of responsibilities between Local and Central NOG instances allows for efficient management and maintenance of large-scale data center networks.

According to an embodiment, figure 7b illustrates a low-level design for configuring a service between two Network Operations Gateway (NOG) instances, referred to as "master" and "slave." These NOG instances manage different parts of the network infrastructure, with the master instance managing devices within one area and the slave instance handling devices in another area. The service can be identified by a VxLAN identifier, which is used on both NOG instances to ensure proper synchronization. Preferably, the present technology can comprise a synchronization process involves in creating specific objects, EDGE1A/B on the slave instance and TOR2A/B on the master instance, and completing their configuration with evpn_edges objects on each side.

According to an embodiment, the synchronization process configures services between NOG instances. For example, It can begin by creating the EDGE1A/B objects on the slave instance and the TOR2A/B objects on the master instance. These objects represent the network devices that need to be configured as part of the service. Once these objects have been created, evpn_edges objects are added to each side to complete the configuration process. The evpn_edges objects enable the communication between the devices and ensure that the service functions correctly within the data center infrastructure.

The low-level design for configuring services between NOG instances provides several advantages. By using a VxLAN identifier, the synchronization process ensures that both NOG instances have consistent information about the network devices and their configurations. This reduces the likelihood of errors and inconsistencies in the network infrastructure. Additionally, by allowing each NOG instance to perform configuration tasks on their relevant switches, the design enables efficient management of the data center environment while maintaining security and reliability.

According to an embodiment, the multi-NOG configuration in the processing system offers several technical advantages:
- Isolation of networks: By having multiple NOGs, each responsible for managing a specific switch or a group of switches, the network infrastructure is isolated, reducing the risk of unintended changes or misconfigurations that could affect the entire data center.
- Security: The multi-NOG configuration enhances security by limiting access to configurations and control of switches to only those authorized personnel who manage the specific NOG. This reduces the attack surface and minimizes the potential impact of a security breach.
- Scalability: As the data center grows, adding more switches can be easily managed by creating new NOGs without affecting the existing infrastructure or requiring extensive changes to the management system.
- Flexibility: Each NOG slave can be configured independently, allowing for customization and tailored solutions for specific use cases or requirements within the data center.

According to an embodiment, the present technology comprises a multi-controllers sub-system for managing and automating the deployment and configuration of the computing infrastructure 10, the multi-controllers sub-system comprising:
- multiple controllers, each responsible for managing a subset of the infrastructure, and
- a communication module enabling seamless communication between the controllers.

This design enhances scalability, improves fault tolerance, and ensures efficient resource utilization by allowing for parallel processing and load balancing among the controllers.

According to an embodiment, and as previously described, the processing sub-system 200 is configured to automate the deployment and management of computing infrastructure 10, including un-provisioned servers 11 and switches 12, preferably in a data center environment.

Advantageously, this processing system offers several technical advantages:
- Minimal footprint: The automated deployment of computing infrastructure 10 using the processing sub-system 200 reduces the need for manual intervention, resulting in a smaller operational footprint and faster deployment times.
- Automated infrastructure deployment: The processing sub-system 200 automates the process of deploying computing infrastructure 10, including servers 11 and switches 12, reducing errors and inconsistencies that can occur with manual methods.
- Optional security measures against unwanted physical accesses: The processing sub-system 200 can comprise features to ensure secure boot and disk encryption for the computing infrastructure 10 components, providing an additional layer of security against unauthorized access.
- Real-time feedback: The synchronization process between Netbox 210 and OpenStack 220 enables real-time feedback, allowing administrators to monitor and manage the computing infrastructure 10 network more effectively.
- Parallel processing: The parallel provisioning of configurations for multiple pieces of equipment in a computing infrastructure 10 using the CMDB module 210 and the deployment module 220 ensures that new equipment is quickly integrated into the existing infrastructure without causing unnecessary downtime or configuration conflicts.
- Encryption for data protection: The optional encryption feature for data protection ensures that sensitive information remains confidential even if the physical security of the servers 11 is compromised.

According to an embodiment, the present technology concerns the automatic initialisation of network configurations in a data center, i.e. a computing infrastructure 10. This process 100 can, for example, begin by pre-generating YAML files containing the necessary information to configure network equipment. These YAML files are converted into usable configuration files using processes under a Configuration Management DataBase (CMDB) module 210 and other tools.

Preferably, upon receiving the pre-filled response file, the sub-system 200 executes several steps:
- Network configurations are created to establish virtual networks necessary for managing server communications and various network interfaces.
- DNS mask configuration: The DNS mask is configured with required information, acting as an interface between physical assets and the sub-system 200. It uses standard protocols like DHCP to answer requests from servers and provide them with necessary configurations.
- Network equipment discovery: Once the DNS mask is configured, network switches 12 can be discovered, and their configurations are updated accordingly based on the information in the YAML files. The switches 12 will then reboot, apply new configuration, and become available for further management.

According to an embodiment, the present technology revolves also around a control mechanism that enables request instantiation in a data centre 10. This mechanism involves comparing real configurations with their logical counterparts using tools like Ironic 270 and Netbox 210:
- Server discovery: When a new server 11 is detected, a deployment module 220, using for example OpenStack, initiates actions to configure it automatically, including installing initial operating system image, registering the server 11 with Netbox 210, and enriching its inventory.
- Configuration synchronization: Once the server's configuration is updated in Netbox 210, Dicious 230 generates necessary network configuration files for OpenStack 220 to use, enabling creation of appropriate virtual networks, ports, and configurations required for the server 11 to function correctly.
- Server boot: Once all configurations are in place, the server 11 can be booted, and it will begin communicating with OpenStack 220 via Ironic 270. This communication enables discovery, enrollment, and management by OpenStack 220 using standard procedures.

According to an embodiment, the present technology also involves parallel execution of configuration tasks using Ironic 270:
- Power management: Ironic 270 manages power states of servers 11 to ensure they are ready for deployment or maintenance activities, including turning servers 11 on or off as needed.
- Image deployment: Ironic 270 can deploy operating system images and other necessary configurations to newly added servers 11, ensuring consistency and minimizing downtime.
- Provisioning: Ironic 270 can provision new servers 11 with appropriate network configurations, allowing them to integrate seamlessly into the existing data center infrastructure 10. This includes configuring virtual interfaces, IP addresses, and routing tables.

According to an embodiment, the present technology deals with synchronizing multiple controllers in a data centre 10 environment, specifically Netbox 210 and OpenStack 220:
- Configuration update: When a change is made to the network configuration in Netbox 210, it is propagated to all connected OpenStack 220 controllers through well-defined APIs or communication mechanisms.
- Automatic network reconfiguration: Once OpenStack 220 controllers receive updated configuration, they automatically reconfigure virtual networks and other components as needed to maintain consistency with physical network.
- Real-time feedback: This synchronisation process enables real-time feedback between Netbox 210 and OpenStack 220, allowing administrators to monitor and manage the data center 10 network more effectively.

According to another embodiment, the present technology also involves parallel provisioning of configurations for multiple pieces of equipment in a data centre 10 using Netbox 210 and OpenStack 220:
- Configuration impo rt: When new equipment is added to the data centre 10, its configuration information is imported into Netbox 210.
- Automated configuration propagation: Once configuration information is imported into Netbox 210, it is automatically propagated to all connected OpenStack 220 controllers through well-defined APIs or communication mechanisms.
- Parallel processing: OpenStack 220 controllers process the configuration information concurrently, enabling multiple pieces of equipment to be configured and integrated into data center 10 network more efficiently.
- Feedback and validation: This process enables real-time feedback between Netbox 210 and OpenStack 220, allowing administrators to validate configuration changes and ensure all equipment is functioning correctly.

The present technology also includes an optional aspect for encryption for data protection using Self-Encrypting Drives (SEDs) and Ironic 270 for automatic management of encryption keys.

Additionally, the present technology relates to improved provisioning processes, Secure Boot technology, and Data Centre as a Service with distributed auditing and key management. These features offer significant improvements in the area of data security for large-scale data centres by implementing encryption at the disk level using Self-Encrypting Drives, automating provisioning processes with Ironic 270, enhancing boot security through Secure Boot technology, and enabling clients to have full control over their infrastructure while maintaining data security with distributed key management and auditing features.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present technology may become apparent to those skilled in the art. The foregoing description is intended to be exemplary rather than limiting. The scope of the present technology is, therefore, intended to be limited solely by the scope of the appended claims.

### References

10 A computing infrastructure
11 A server
12 A switch
100 A computer-implemented method for automated deployment of at least one computing infrastructure
110 Accessing a computer-readable medium
120 Calculating data
130 Initialising software components
140 Determining configurations
150 Provisioning at least one network stack
160 Declaring at least one network
170 Synchronising the deployment module with the CMDB module
180 Booting at least one un-provisioned server
200 A processing system
210 A Configuration Management DataBase (CMDB) module
220 A deployment module
230 A communication module
231 A synchronization module
240 A configuration module
250 A Network Operations Gateway (NOG) module
251 A NOG master
252 A NOG Slave
260 A Domain Name System module
270 A server management module
280 A key management module
290 A network virtualisation and orchestration component
300 A processor
400 A method for managing configurations of at least one computing infrastructure
410 Accessing a computer-readable medium
420 Creating at least one instance of at least one first Virtual Service Network
430 Detecting the instance of the first Virtual Service Network
440 Verifying step
450 Duplicating the first endpoint from the first Network Operations Gateway module NOG1 to the second Network Operations Gateway module NOG2
500 A processing system for managing configurations of at least one computing infrastructure
510 NOG1
511 Node of NOG1
512 Virtual Service Network of NOG1
513 Endpoint of NOG1
520 NOG2
521 Node of NOG2
522 Virtual Service Network of NOG2
523 Endpoint of NOG2

## Claims

1. A computer-implemented method (400) for managing configurations of an on-premise computing infrastructure (10), the method (400) comprising:
• accessing (410) a computer-readable medium comprising instructions which, upon being operated by a processor (300), causes the execution of software components comprising:
∘ A first Network Operations Gateway module NOG1 (510) being provisioned with a first network device;
∘ A second Network Operations Gateway module NOG2 (520) being provisioned with a second network device;
∘ A synchronization module GFS (231) configured to reconcile configurations between the first Network Operations Gateway module NOG1 (510) and the second Network Operations Gateway module NOG2 (520);
The synchronization module (231) comprising:
∘ A predetermined list of tags, each tag of the predetermined list of tags being associated with a predetermined object in a network, the object being a node or a service;
∘ A plurality of sets of rules, each set of rules being associated with a tag of the predetermined list of tags;
• A creation phase, the creation phase comprising:
∘ Creating (420) an instance of a first Virtual Service Network (512) by the first Network Operations Gateway NOG1 (510), the first Virtual Service Network (512) being managed by the first Network Operations Gateway module NOG1 (510), the first Virtual Service Network (512) comprising a specific tag and a specific network identifier, the first Virtual Service Network (512) comprising also a first endpoint (513), the first endpoint (513) comprising data;
∘ Detecting (430), by the synchronization module (231), the instance of the first Virtual Service Network (512) by detecting the specific tag;
∘ Verifying (440), by the synchronization module (231), if the second Network Operations Gateway module NOG2 (520) comprises an instance of at least a second Virtual Service Network (522) comprising the specific tag:
▪ If the second Network Operations Gateway module NOG2 (520) does not comprise an instance of a second Virtual Service Network (522) comprising the specific tag:
• Sending, by the synchronisation module 231, a request to the second Network Operations Gateway module NOG2 (520) to create an instance of a second Virtual Service Network (522) comprising the specific tag and a second endpoint (523);
• Creating, by the second Network Operations Gateway module NOG2 (520), an instance of a second Virtual Service Network (522) comprising the specific tag and a second endpoint (523);
∘ Duplicating (450) the first endpoint (513) from the first Network Operations Gateway module NOG1 (510) to the second Network Operations Gateway module NOG2 (520) by synchronizing, by the synchronization module (231), the data of the first endpoint (513) with the data of the second endpoint (523).

2. The method (400) according to claim 1, wherein the first Network Operations Gateway module NOG1 (510) is a central Network Operations Gateway module cNOG, and wherein the second Network Operations Gateway module NOG2 (520) is a local Network Operations Gateway module lNOG.

3. The method (400) according to claim 1, wherein the first Network Operations Gateway module NOG1 (510) is a local Network Operations Gateway module lNOG, and wherein the second Network Operations Gateway module NOG2 (520) is a central Network Operations Gateway module cNOG.

4. The method (400) according to any one of claims 2 or 3, wherein the central Network Operations Gateway module cNOG is a single point of control and management for the network of the computing infrastructure (10) and is configured to manage and configure network devices across the computing infrastructure (10), and wherein the local Network Operations Gateway module INOG is configured to manage and configure network devices within a predetermined local environment of the computing infrastructure (10).

5. The method (400) according to claim 1, wherein the first Network Operations Gateway module NOG1 (510) is a local Network Operations Gateway module lNOG1 and wherein the second Network Operations Gateway module NOG2 (520) is a local Network Operations Gateway module lNOG2, and wherein a local Network Operations Gateway module INOG is configured to manage and configure network devices within a predetermined local environment of the computing infrastructure (10).

6. The method (400) according to any one of claims 1 to 5, wherein the first Virtual Service Network comprises at least one first node; and wherein the step of creating a instance of a second Virtual Service Network (evpn) comprises the creation of a remote node by the second Network Operations Gateway module NOG2.

7. The method (400) according to any one of claims 1 to 6, wherein the synchronization module 231 is configured to scan a network of the computing infrastructure (10) every X seconds, X being a predetermined number.

8. The method (400) according to any one of claims 1 to 7, the method further comprising, after the creation phase, a deletion phase, the deletion phase comprising erasing the instance of the second Virtual Service Network (522) comprising the specific tag and at least the second endpoint (523).

9. The method (400) according to any one of claims 1 to 8, wherein the second endpoint (523) is a remote endpoint, and wherein the second Virtual Service Network (522) is a remote Virtual Service Network.

10. The method (400) according to any one of the previous claims comprises, before the duplicating step, a step of verification of a set of rules associated with the specific tag, the set of rules comprising instructions for the synchronization module (231).

11. The method (400) according to any one of claims 1 to 10, the method further comprising, before and/or after the creation phase, an automated deployment phase (100) of a computing infrastructure (10), the computing infrastructure (10) comprising a un-provisioned server (11) and a switch (12), the automated deployment phase (100) comprising:
• accessing (110) a computer-readable medium comprising instructions which, upon being operated by the processor (300), causes the execution of software components comprising:
∘ a Configuration Management DataBase (CMDB) module (210) configured to manage and store inventory data relating to the un-provisioned server (11) and to the switch (12);
∘ a deployment module (220) configured to deploy the computing infrastructure (10);
∘ a communication module (230) configured to:
▪ allow communication between the Configuration Management DataBase module (210) and the deployment module (220); and
▪ manage a Dynamic Host Configuration Protocol (DHCP) interface module;
∘ a configuration module (240) configured to initialize the Configuration Management DataBase module (210) with information relating to the switch (12) and its configuration;
∘ a Network Operations Gateway (NOG) module (250) configured to pilot the switch (12) by receiving configurations data from the CMDB module (210) and by applying the received configurations to the switch (12);
∘ a Domain Name System (DNS) module (260) configured to manage the Domain Name System services in the computing infrastructure (10);
• calculating (120) data for initializing the Configuration Management DataBase module (210), the calculated data comprising a Internet Protocol (IP) address of the switch (12);
• initializing (130), by the configuration module (240), at least a part of the software components, by:
∘ initializing the Configuration Management DataBase module (210) using the calculated data; and
∘ configuring the Domain Name System module (260) with configurations from the CMDB module (210);
• determining (140), using the Configuration Management DataBase module (210), configurations for:
∘ the communication module (230) on a Intelligent Platform Management Interface (IPMI) and on a management network; and
∘ the switch (12) being configured to allow its provisioning based on the calculated data from the Configuration Management DataBase module (210);
• provisioning (150) a network stack with provisioning data from the Configuration Management DataBase module (210), the provisioning data comprising data relating to network devices, interfaces, networks and the configurations determined by the CMDB module (210), the provisioning (150) comprising:
∘ provisioning the DNS module (260);
∘ provisioning the Network Operations Gateway module (250);
• declaring (160) a network in the deployment module (220);
• synchronizing (170) the deployment module (220) with the Configuration Management DataBase module (210) to start a server discovery process by the deployment module (220) using the communication module (230); and
• booting (180) the un-provisioned server (11) to be discovered by the deployment module (220).

12. A computer-readable storage medium storing instructions that, upon being executed by a processing system, cause the processing system to perform the method of any one of claims 1 to 11.

13. A processing system (500) for managing configurations of a computing infrastructure (10), the computing infrastructure being on-premise, the processing system (500) comprising:
• A processor (300);
• a computer-readable medium comprising instructions which, upon being operated by the processor (300), causes the execution of software components comprising:
∘ A first Network Operations Gateway module NOG1 (510) being provisioned with a network device;
∘ A second Network Operations Gateway module NOG2 (520) being provisioned with a network device;
∘ A synchronization module (GFS) (231) being configured to reconcile configurations between the first Network Operations Gateway module NOG1 (510) and the second Network Operations Gateway module NOG2 (520);
The synchronization module (231) comprising:
▪ A predetermined list of tags, each tag of the predetermined list of tags being associated with a predetermined object in a network, the object being a node or a service;
▪ A plurality of sets of rules, each set of rules being associated with a tag of the predetermined list of tags.

14. The processing system (500) according to claim 13 further comprising a processing sub-system (200) for automated deployment of a computing infrastructure (10) comprising at least:
• one un-provisioned server (11), and
• a switch (12);
and wherein the software components further comprise:
∘ A Configuration Management DataBase (CMDB) module (210) configured to manage and store inventory data relating to the un-provisioned server and to the a switch;
∘ a deployment module (220) configured to deploy the computing infrastructure;
∘ a communication module (230) configured to:
▪ allow communication between the Configuration Management DataBase module (210) and the deployment module (220); and
▪ manage a Dynamic Host Configuration Protocol (DHCP) interface module;
∘ a configuration module (240) configured to initialize the Configuration Management DataBase module (210) with information relating to the a switch and its configuration;
∘ a Network Operations Gateway (NOG) module (250) configured to pilot the switch by receiving configurations data from the Configuration Management DataBase module (210) and by applying the received configurations to the a switch;
∘ a Domain Name System (DNS) module (260) configured to manage the Domain Name System services in the computing infrastructure;

15. The processing system (500) according to any one claims 13 and 14, the processing system further comprising a Network Operations Gateway Master (251) and at least a plurality of Network Operations Gateway slaves (252), the Network Operations Gateway master (251) comprising data about a plurality of switches (12), each Network Operations Gateway slave (252) comprising data about only one switch (12) of the plurality of switches (12).

## Amended claims

### Amended claims in accordance with Rule 137(2) EPC.

1. A computer-implemented method (400) for managing configurations of an on-premise computing infrastructure (10), the method (400) comprising:
• accessing (410) a computer-readable medium comprising instructions which, upon being operated by a processor (300), causes the execution of software components comprising:
o A first Network Operations Gateway module NOG1 (510) being provisioned with a first network device;
∘ A second Network Operations Gateway module NOG2 (520) being provisioned with a second network device;
o A synchronization module GFS (231 to provide synchronization between the first Network Operations Gateway module NOG1 (510) and the second Network Operations Gateway module NOG2 (520), wherein the synchronization module comprises:
o A predetermined list of tags, each tag of the predetermined list of tags being associated with a predetermined object in a network, the object being a node or a service;
o A plurality of sets of rules, each set of rules being associated with a tag of the predetermined list of tags, the sets of rules operative to provide instructions for the synchronization between the first Network Operations Gateway module NOG1 (510) and the second Network Operations Gateway module NOG2 (520);
• A creation phase, the creation phase comprising:
o Creating (420) an instance of a first Virtual Service Network (512) by the first Network Operations Gateway NOG1 (510), the first Virtual Service Network (512) being managed by the first Network Operations Gateway module NOG1 (510), the first Virtual Service Network (512) comprising a specific tag and a specific network identifier, the first Virtual Service Network (512) comprising also a first endpoint (513), the first endpoint (513) comprising data;
o Detecting (430), by the synchronization module (231), the instance of the first Virtual Service Network (512) by detecting the specific tag;
o Verifying (440), by the synchronization module (231), if the second Network Operations Gateway module NOG2 (520) comprises an instance of at least a second Virtual Service Network (522) comprising the specific tag:
▪ If the second Network Operations Gateway module NOG2 (520) does not comprise an instance of a second Virtual Service Network (522) comprising the specific tag:
• Sending, by the synchronisation module 231, a request to the second Network Operations Gateway module NOG2 (520) to create an instance of a second Virtual Service Network (522) comprising the specific tag and a second endpoint (523);
• Creating, by the second Network Operations Gateway module NOG2 (520), an instance of a second Virtual Service Network (522) comprising the specific tag and a second endpoint (523);
o Duplicating (450) the first endpoint (513) from the first Network Operations Gateway module NOG1 (510) to the second Network Operations Gateway module NOG2 (520) by synchronizing, by the synchronization module (231), the data of the first endpoint (513) with the data of the second endpoint (523).

2. The method (400) according to claim 1, wherein the first Network Operations Gateway module NOG1 (510) is a central Network Operations Gateway module cNOG, and wherein the second Network Operations Gateway module NOG2 (520) is a local Network Operations Gateway module INOG.

3. The method (400) according to claim 1, wherein the first Network Operations Gateway module NOG1 (510) is a local Network Operations Gateway module INOG, and wherein the second Network Operations Gateway module NOG2 (520) is a central Network Operations Gateway module cNOG.

4. The method (400) according to any one of claims 2 or 3, wherein the central Network Operations Gateway module cNOG is a single point of control and management for the network of the computing infrastructure (10) and is configured to manage and configure network devices across the computing infrastructure (10), and wherein the local Network Operations Gateway module INOG is configured to manage and configure network devices within a predetermined local environment of the computing infrastructure (10).

5. The method (400) according to claim 1, wherein the first Network Operations Gateway module NOG1 (510) is a local Network Operations Gateway module INOG1 and wherein the second Network Operations Gateway module NOG2 (520) is a local Network Operations Gateway module INOG2, and wherein a local Network Operations Gateway module INOG is configured to manage and configure network devices within a predetermined local environment of the computing infrastructure (10).

6. The method (400) according to any one of claims 1 to 5, wherein the first Virtual Service Network comprises at least one first node; and wherein the step of creating a instance of a second Virtual Service Network (evpn) comprises the creation of a remote node by the second Network Operations Gateway module NOG2.

7. The method (400) according to any one of claims 1 to 6, wherein the synchronization module 231 is configured to scan a network of the computing infrastructure (10) every X seconds, X being a predetermined number.

8. The method (400) according to any one of claims 1 to 7, the method further comprising, after the creation phase, a deletion phase, the deletion phase comprising erasing the instance of the second Virtual Service Network (522) comprising the specific tag and at least the second endpoint (523).

9. The method (400) according to any one of claims 1 to 8, wherein the second endpoint (523) is a remote endpoint, and wherein the second Virtual Service Network (522) is a remote Virtual Service Network.

10. The method (400) according to any one of the previous claims comprises, before the duplicating step, a step of verification of a set of rules associated with the specific tag, the set of rules comprising instructions for the synchronization module (231).

11. The method (400) according to any one of claims 1 to 10, the method further comprising, before and/or after the creation phase, an automated deployment phase (100) of a computing infrastructure (10), the computing infrastructure (10) comprising a un-provisioned server (11) and a switch (12), the automated deployment phase (100) comprising:
• accessing (110) a computer-readable medium comprising instructions which, upon being operated by the processor (300), causes the execution of software components comprising:
o a Configuration Management DataBase (CMDB) module (210) configured to manage and store inventory data relating to the un-provisioned server (11) and to the switch (12);
o a deployment module (220) configured to deploy the computing infrastructure (10);
o a communication module (230) configured to:
▪ allow communication between the Configuration Management DataBase module (210) and the deployment module (220); and
▪ manage a Dynamic Host Configuration Protocol (DHCP) interface module;
o a configuration module (240) configured to initialize the Configuration Management DataBase module (210) with information relating to the switch (12) and its configuration;
∘ at least one of the first or second Network Operations Gateway (NOG) modules (510, 520) configured to manage and control the switch (12) by receiving configurations data from the CMDB module (210) and applying the received configurations to the switch (12);
o a Domain Name System (DNS) module (260) configured to manage the Domain Name System services in the computing infrastructure (10);
• calculating (120) data for initializing the Configuration Management DataBase module (210), the calculated data comprising an Internet Protocol (IP) address of the switch (12);
• initializing (130), by the configuration module (240), at least a part of the software components, by:
o initializing the Configuration Management DataBase module (210) using the calculated data; and
o configuring the Domain Name System module (260) with configurations from the CMDB module (210);
• determining (140), using the Configuration Management DataBase module (210), configurations for:
o the communication module (230) on an Intelligent Platform Management Interface (IPMI) and on a management network; and
o the switch (12) configured to be provisioned based on the calculated data from the Configuration Management DataBase module (210);
• provisioning (150) a network stack with provisioning data from the Configuration Management DataBase module (210), the provisioning data comprising data relating to network devices, interfaces, networks and the configurations determined by the CMDB module (210), the provisioning (150) comprising:
∘ provisioning the DNS module (260);
∘ provisioning the Network Operations Gateway module (250);
• declaring (160) a network in the deployment module (220) configured to deploy the computing infrastructure (10) by:
o synchronizing (170) the deployment module (220) with the Configuration Management DataBase module (210) to start a server discovery process by the deployment module (220) using the communication module (230); and
o booting (180), via the IMPI, the un-provisioned server (11) to be discovered by the deployment module (220).

12. A computer-readable storage medium storing instructions that, upon being executed by a processing system, cause the processing system to perform the method of any one of claims 1 to 11.

13. A processing system (500) for managing configurations of a computing infrastructure (10), the computing infrastructure being on-premise, the processing system (500) comprising:
• A processor (300);
• a computer-readable medium comprising instructions which, upon being operated by the processor (300), causes the execution of software components comprising:
o A first Network Operations Gateway module NOG1 (510) being provisioned with a network device;
∘ A second Network Operations Gateway module NOG2 (520) being provisioned with a network device;
o A synchronization module GFS (231) operative to provide synchronization between the first Network Operations Gateway module NOG1 (510) and the second Network Operations Gateway module NOG2 (520);, wherein the synchronization module comprises:
▪ A predetermined list of tags, each tag of the predetermined list of tags being associated with a predetermined object in a network, the object being a node or a service;
▪ A plurality of sets of rules, each set of rules being associated with a tag of the predetermined list of tags, the sets of rules operative to provide instructions for the synchronization between the first Network Operations Gateway module NOG1 (510) and the second Network Operations Gateway module NOG2 (520);
• Wherein, the execution of the software components operates to:
o Create (420) an instance of a first Virtual Service Network (512) by the first Network Operations Gateway NOG1 (510), the first Virtual Service Network (512) being managed by the first Network Operations Gateway module NOG1 (510), the first Virtual Service Network (512) comprising a specific tag and a specific network identifier, the first Virtual Service Network (512) comprising also a first endpoint (513), the first endpoint (513) comprising data;
o Detect (430), by the synchronization module (231), the instance of the first Virtual Service Network (512) by detecting the specific tag;
o Verify (440), by the synchronization module (231), if the second Network Operations Gateway module NOG2 (520) comprises an instance of at least a second Virtual Service Network (522) comprising the specific tag:
▪ If the second Network Operations Gateway module NOG2 (520) does not comprise an instance of a second Virtual Service Network (522) comprising the specific tag:
• Send, by the synchronisation module 231, a request to the second Network Operations Gateway module NOG2 (520) to create an instance of a second Virtual Service Network (522) comprising the specific tag and a second endpoint (523);
• Create, by the second Network Operations Gateway module NOG2 (520), an instance of a second Virtual Service Network (522) comprising the specific tag and a second endpoint (523);
o Duplicate (450) the first endpoint (513) from the first Network Operations Gateway module NOG1 (510) to the second Network Operations Gateway module NOG2 (520) by synchronizing, by the synchronization module (231), the data of the first endpoint (513) with the data of the second endpoint (523).

14. The processing system (500) according to claim 13 further comprising a processing subsystem (200) for automated deployment of a computing infrastructure (10) comprising at least:
• one un-provisioned server (11), and
• a switch (12);
and wherein the software components further comprise:
o A Configuration Management DataBase (CMDB) module (210) configured to manage and store inventory data relating to the un-provisioned server and to the a switch;
o a deployment module (220) configured to deploy the computing infrastructure;
o a communication module (230) configured to:
▪ allow communication between the Configuration Management DataBase module (210) and the deployment module (220); and
▪ manage a Dynamic Host Configuration Protocol (DHCP) interface module;
o a configuration module (240) configured to initialize the Configuration Management DataBase module (210) with information relating to the a switch and its configuration;
∘ at least one of the first or second Network Operations Gateway (NOG) module (250) configured to manage and control the switch by receiving configurations data from the Configuration Management DataBase module (210) and by applying the received configurations to the a switch;
o a Domain Name System (DNS) module (260) configured to manage the Domain Name System services in the computing infrastructure (10);
• calculate (120) data for initializing the Configuration Management DataBase module (210), the calculated data comprising an Internet Protocol (IP) address of the switch (12);
• initialize (130), by the configuration module (240), at least a part of the software components, by:
o initializing the Configuration Management DataBase module (210) using the calculated data; and
o configuring the Domain Name System module (260) with configurations from the CMDB module (210);
• determine (140), using the Configuration Management DataBase module (210), configurations for:
o the communication module (230) on an Intelligent Platform Management Interface (IPMI) and on a management network; and
o the switch (12) configured to be provisioned based on the calculated data from the Configuration Management DataBase module (210);
• provision (150) a network stack with provisioning data from the Configuration Management DataBase module (210), the provisioning data comprising data relating to network devices, interfaces, networks and the configurations determined by the CMDB module (210), the provisioning (150) comprising:
∘ provisioning the DNS module (260);
∘ provisioning the Network Operations Gateway module (250);
• declare (160) a network in the deployment module (220) configured to deploy the computing infrastructure (10) by:
o synchronizing (170) the deployment module (220) with the Configuration Management DataBase module (210) to start a server discovery process by the deployment module (220) using the communication module (230); and
o booting (180), via the IMPI, the un-provisioned server (11) to be discovered by the deployment module (220).

15. The processing system (500) according to any one claims 13 and 14, the processing system further comprising a Network Operations Gateway Master (251) and at least a plurality of Network Operations Gateway slaves (252), the Network Operations Gateway master (251) comprising data about a plurality of switches (12), each Network Operations Gateway slave (252) comprising data about only one switch (12) of the plurality of switches (12).
